(19) Europäisches Patentamt
European Patent Office
Office européen des brevets

(11) **EP 1 419 397 B1**

(12) **EUROPEAN PATENT SPECIFICATION**

(45) Date of publication and mention
of the grant of the patent:
**05.06.2013 Bulletin 2013/23**

(51) Int Cl.:
***G01R 23/10*** (2006.01)

(21) Application number: **02757333.6**

(22) Date of filing: **22.08.2002**

(86) International application number:
**PCT/US2002/026839**

(87) International publication number:
**WO 2003/019206 (06.03.2003 Gazette 2003/10)**

(54) **ULTRA-LOW BACKGROUND GAS-FILLED ALPHA COUNTER**

GASGEFÜLLTER ALPHAZÄHLER MIT ULTRANIEDRIGEM HINTERGRUND

COMPTEUR ALPHA A GAZ A TRES FAIBLE FOND NATUREL DE RAYONNEMENT

(84) Designated Contracting States:
**AT BE BG CH CY CZ DE DK EE ES FI FR GB GR
IE IT LI LU MC NL PT SE SK TR**
Designated Extension States:
**AL LT LV MK RO SI**

(30) Priority: **23.08.2001 US 938136**

(43) Date of publication of application:
**19.05.2004 Bulletin 2004/21**

(73) Proprietor: **Warburton, William K.
Menlo Park, CA 94025 (US)**

(72) Inventors:
• **WARBURTON, William, K.
Oakland, CA 94602 (US)**
• **WAHL, John
Fremont, CA 94538 (US)**
• **MOMAYEZI, Michael
Fremont, CA 94043 (US)**

(74) Representative: **Skone James, Robert Edmund et al
Gill Jennings & Every LLP
The Broadgate Tower
20 Primrose Street
London EC2A 2ES (GB)**

(56) References cited:
DE-A1- 3 129 431    US-A- 3 721 825
US-A- 5 059 803    US-A- 5 192 868
US-A- 5 525 804

• Knoll G F: "Radiation Detection and Measurement", 1 January 1989 (1989-01-01), Wiley & Sons, US, New York, XP002631280, * Chapter 6, Part V., B., "Position-Sensitive Proportional Counters", figure 6-15; page 190 * * * * *

**Description**

BACKGROUND OF THE INVENTION

The present invention relates generally to systems for detecting and counting nuclear particles, and more particularly to reducing the background counting rate in gas filled particle counters. The specific embodiments described relate to reducing background counting rates in both multi-wire counters and ionization chambers used to detect and count alpha particles, but the same techniques could be applied to counting other charged particles as well.

The Need for Low Background Alpha Counting

Low background alpha particle counting is important when very low concentrations of activity must be detected, such as the testing of environmental samples and of materials for the electronics industry. A particular example is the need for low alpha lead in high density packaging technologies where silicon chips are often directly soldered to a mounting substrate using ball grid arrays or related technologies. As the lead in the solder is in intimate contact with the silicon chip, it must have low alpha emissions for the chips to function reliably. The next generation of high density circuits will require lead that emits less than 0.005 $\alpha$/cm$^2$/hour, [ITRS - 1999] which is more than a factor of 10 less than can be measured with extant technologies.

Current State of the Art

There are two major techniques presently used to measure alpha particle emission: gas filled counters and silicon spectrometers. They have similar background counting rates, but for different reasons.

Gas Filled Counters

A comprehensive presentation of the distinctions between gas-filled ionization and proportional counters can be found in Knoll. [KNOLL - 1989, Chapters 5 & 6]. Ionization chambers are simply gas filled volumes fitted with electrodes that apply an electric field to the gas and collect any charges generated therein. An alpha particle traversing the gas loses energy and produces an ionization track composed of gas ions and the electrons knocked off them. The lighter electrons drift toward the positive anode about 1000 times more quickly than the heavier ions drift toward the negative cathode. [KNOLL - 1989, pp. 131-138]. Usually only the total current is measured, giving the average rate of ion formation within the chamber. Ion chambers can be operated as pulse counters by integrating the currents the drifting electrons induce in the anode. Each ionization track then produces a single output pulse and is counted individually. [KNOLL - 1989, pp. 149-157] Because current is induced flow for the full electron drift time, the total integrated charge produced by a track depends upon both its starting location in the counter and the total track charge. Since detector capacitances are generally large and the total track charges small, signal-to-noise is poor for operation in this mode.

Proportional counters use gas avalanche gain to increase signal-to-noise. [KNOLL - 1989, pp. 160-165] This mechanism requires large electric fields, which are produced by high voltages and very thin anode wires. Because the avalanche charge is generated close to the wires, induced charge effects are eliminated, and output pulse amplitude is proportional only to initial track charge and independent of its location within the counter. Proportional counters are commonly operated in single pulse counting mode. [KNOLL - 1989, pp. 180-185] Because pulse shape is determined by the ions formed in the avalanche drifting away from the anode wire, typically in a few microseconds, all output pulses in a well designed detector have approximately the same shape.

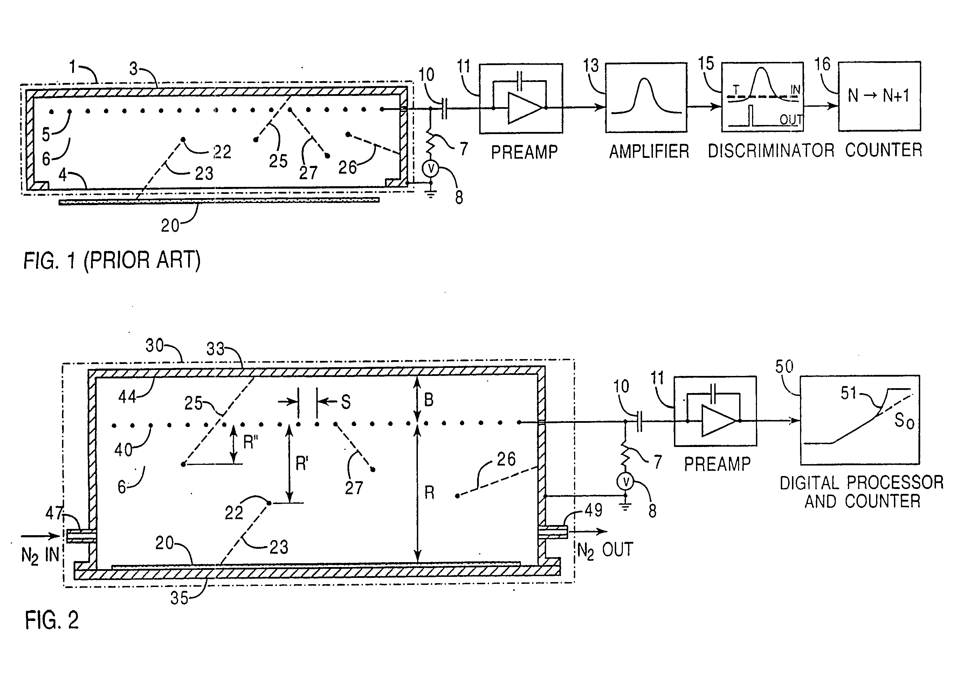

State of the art low background alpha counters can achieve sensitivities of about 0.05 $\alpha$/cm$^2$/hr. [IICO - 1999] They are multi-wire gas-filled proportional counters with ultra-thin entrance windows that are typically constructed as shown in Fig. 1. The detector 1 is comprised of a conducting chamber 3 filled with a counting gas 6, with a grid of anode wires **5** suspended next to one chamber wall and sealed on the opposite side with an ultra-thin window **4**. The anode is biased via a voltage source **8** through a large value resistor **7** and also connected via a capacitor **10** to a charge sensitive preamplifier **11,** a shaping amplifier **13,** a discriminator **15** and counter **16** in turn. A sample **20** placed close to the entrance window **4** emits alpha particles into the chamber. The window **4** thus defines a sample region, namely that part of the chamber volume on or near which a sample is to be located. In designs having the sample located within the chamber, the chamber structure that supports the sample would help define the sample region.

The specific shown alpha particle **22** creates an ionization track **23** in counting gas 6. The track electrons drift toward the anode **5,** where they are amplified by the avalanche process in the vicinity of the wires and then collected. [KNOLL - 1989, pp. 160-165] The resultant current signal is integrated by the preamplifier **11** and shaped by amplifier **13** to produce a pulse. Discriminator **15** triggers when the pulse crosses a preset threshold T, emitting a short output pulse that is then counted by the counter **16.**

Because alpha particles emitted from the chamber backwall **25,** sidewall **26,** and anode wires **27** also generate preamplifier/amplifier output pulses identical to those from the sample **20,** they are also counted. The resultant background counting rate can only be reduced significantly by constructing all of the counter's components from materials having very low alpha emissivity. This approach is expensive and also becomes exponentially more difficult as ever lower backgrounds are sought, so little further improvement appears likely after 20 years of development. Gas filled counters do have the advantage that, being filled with a low density gas, they are relatively insensitive to background radiation arising from environmentally generated gamma rays and also to most cosmic rays, which are energetic muons. They can also be made quite large, with commercial units up to 30 cm by 30 cm being common.

Silicon Alpha Spectrometers

Silicon alpha spectrometers are large area Si PIN diode detectors which are biased and connected to a charge sensitive preamplifier and amplifier much as is the counter shown in **Fig. 1.** As the energy required to produce a free electron in Si is about 10 times smaller than in counting gases, the statistics of charge generation are much better and energy resolutions of 1-2% can be obtained. Their irreducible background is set by cosmic radiation since energetic muons deposit significant charge in the Si. With 100 $\mu$m depletion depths and very careful detector design, this limit can also be reduced to about 0.05 $\alpha/cm^2/hr$. [ORTEC - 1998] These detectors are therefore preferred when it is desirable to identify the source of the alpha particles by measuring their emitted energies. They are also quite robust, having no anode wires or thin windows as sources of microphonics.

They have two major limitations. First, their areas are restricted, both by the unavailability of high quality Si in large areas and because small capacitances are needed to obtain their energy resolution. Second, in low activity work, the sample must be processed to extract all its radioactivity (preferably with 100% efficiency) into a small source spot for presentation to the detector. This renders these detectors impractical for measuring unprocessed or *in situ* samples and also adds a large overhead to measurement costs.

SUMMARY OF THE INVENTION

The current state of the art in reducing background counting rates in gas-filled alpha counters or spectrometers is best described as "passive" in that it seeks to reduce background rates solely by the method of building the counters using materials with extremely low alpha emissivities. In contrast, the present invention provides "active" techniques for operating these same devices so as to achieve significant reductions in background counting rates.

The present invention employs a gas-filled alpha counter that includes a gas-filled chamber having a sample region, an anode, a preamplifier connected to the anode, and a voltage source that applies a bias such that, whenever an ionization track is generated by an alpha particle passing through the gas within the chamber, the electrons in the track are collected by the anode and cause the preamplifier to produce an output signal pulse. The output pulse is associated with the alpha particle and is characteristic of the electron collection process. Thus, both the ionization track and the resultant pulse associated with a given alpha particle can be considered to have an associated region of emanation that corresponds to the region within the chamber where the ionization track originates. A minor distinction exists between our uses of regions of emission and emanation. Region of emission refers to the place where the alpha particle departed from its source. Region of emanation refers to the place where the ionization track begins within the chamber. If the source lies within the chamber the two regions are the same. If the source is external to the chamber, as in the case of alpha particle **22,** then the two regions are separated slightly.

The inventive method of operating such a gas-filled alpha counter includes, for at least some pulses, measuring one or more features of the pulse that differ depending on the pulse's region of emanation, and determining, based on the measurement of the one or more features, the pulse's region of emanation. The counter circuitry can thus be considered to include a primary feature analyzer that measures the one or more features and determines information about the pulse's region of emanation.

Thus, it is possible to discriminate between "sample" alpha particles emitted from the sample and "background" alpha particles emitted from other surfaces within the counter and classify their associated pulses accordingly. Pulses classified as background can then be rejected, thereby effectively reducing background counting rates.

The features that can be used in performing the pulse analysis include: pulse amplitude, duration (closely correlated with collection time), slope, slope divided by amplitude, risetime, and time of arrival, used individually or in combination.

While these techniques can be applied to some existing chambers, in preferred embodiments, the invention contemplates constructing an alpha counter in a manner that exaggerates differences between preamplifier pulse features that result from collecting the ionization tracks generated by alpha particles emanating from different regions within the counter and then recognizing these differences in order to discriminate between the different regions of emanation. In this way, alpha particles from the sample can be counted, while alpha particles emitted from counter components can be identified, and possibly be rejected, resulting in a very low background counting rate, even in large counters.

Two primary approaches are employed in creating and exaggerating these pulse shape differences: first, creating different electric collection fields in different regions of the counter so electron velocities and collection times are different; and, second, adjusting the counter dimensions so that charges from different regions again have different collection times, and also generate different amount of induced charge in the output. In a preferred implementation, we digitize the output pulses and use digital signal processing techniques to make the required discriminations, but analog signal processing techniques can be similarly employed.

Two specific embodiments of the concept are described to demonstrate the relevant principles. The first embodiment is a multi-wire, gas-filled counter, wherein the grid of anode wires is placed much closer to the counter backwall than to the sample wall or entrance window and is operated without gain (i.e., in ionization chamber mode) so that it is sensitive to the flow of induced charges as ionization tracks are collected. This geometric asymmetry makes the electric field in the region between the anode and the backwall much larger than the field between the anode and the sample. Larger electron velocities in the backwall region result in induced charge signals with much larger initial slopes or risetimes than the signals induced by ionization tracks emanating from the sample region. With larger electron velocities and shorter collection distances, overall collection times for backwall ionization tracks are also much shorter than for sample ionization tracks, and this difference serves as a secondary discriminator between these two sources of activity.

The second embodiment is an ionization chamber whose dimensions are adjusted so that drift lengths for collecting sample ionization tracks are much larger than drift lengths for collecting ionization tracks emitted from the backwall anode. This causes the sample track collection times to be much longer than anode track collection times, allowing them to be discriminated. Because their drift lengths are longer, sample tracks will also generate larger total induced charges, allowing signal slope, and, particularly, initial signal slope divided by total induced charge to be used as a secondary discriminator in this case.

These embodiments allow reliable discriminations to be made between ionization tracks generated by the sample and ionization tracks generated by the counter backwall. We further show how improved rejection of ionization tracks emitted from the counter sidewalls can be achieved in either embodiment by the additional use of guard collectors. These guard collectors are placed about the perimeter of the anode plane, parallel to it, and both close to it and close to the sidewalls as well. They are biased at a potential close to that of the anode and connected to a second preamplifier similar to the anode's preamplifier. Ionization tracks emanating from the sidewalls deposit charge on these guard collectors, producing output pulses from the attached preamplifier. A secondary feature analyzer can then analyze the features of these pulses to identify them as emanating from the sidewalls. The simplest feature for this purpose is time of arrival: when operated in anti-coincidence with the anode, these guard collectors reliably reject sidewall source alpha emissions so that only sample source alpha particles are finally counted. Further analyzing the energy in the guard collector pulses increases the efficiency with which sample source alpha particles emanating close to the edges of the sample can be reliably identified.

Applying these active methods to alpha particle counters fabricated with common materials such as Lucite and copper tape allows backgrounds to be achieved that are two or more orders of magnitude lower than are obtained in state of the art counters fabricated using only passive background reduction techniques. Additional background count rate reduction can be achieved by combining these active particle source recognition techniques with the passive use of very low alpha emission counter construction materials, as in existing designs.

A further understanding of the nature and advantages of the present invention may be realized by reference to the remaining portions of the specification and the drawings.

BRIEF DESCRIPTION OF THE DRAWINGS

**Fig. 1** shows a diagram of a prior art multi-wire gas filled proportional counter and its associated electronics processing chain;

**Fig. 2** shows a diagram of an embodiment of the invention as a gas-filled multi-wire ionization chamber attached to a preamplifier and a digital signal processor and counter;

**Fig. 3** shows preamplifier output traces of charge signals induced on the anode during the collection of two ionization tracks emitted from the sample wall of the detector shown in **Fig. 2;**

**Fig. 4** repeats **Fig. 3** for two ionization tracks emitted from the backwall of the detector shown in **Fig. 2;**

**Fig. 5** shows a block diagram of the digital signal processor **50;**

**Fig. 6A** shows a scatter plot of 10-to-90% pulse risetime versus pulse amplitude for a series of signals measured from a source placed at two locations (on the sample wall and on the backwall) within the detector shown in **Fig. 2;**

**Fig. 6B** shows a scatter plot of initial pulse slope versus pulse amplitude for the same set of signals as in **Fig. 6A;**

**Fig. 6C** shows a scatter plot of initial pulse slope divided by pulse amplitude versus pulse amplitude for the same set of signals as in **Fig. 6A;**

**Fig. 6D** repeats **Fig.** 6C, adding signals from a source on the detector side wall;

**Fig. 7** shows a diagram of a preferred embodiment of the invention wherein guard electrodes have been added to the gas-filled multi-wire ionization chamber shown in **Fig. 2;**

**Fig. 8** shows preamplifier output traces of charge signals induced on the guard and anode electrodes during the collection of an ionization track emitted from the sidewall of the detector shown in **Fig. 7;**

**Fig. 9** repeats **Fig. 8** for an ionization track emitted from the sample wall, where the track approaches the sidewall but does not deposit any charge on the guard electrode;

**Fig. 10** shows an embodiment of the invention as a gas-filled parallel plate ionization chamber with guard electrodes added surrounding its anode;

**Figs. 11A and 11B** define distances for alpha tracks emitted from the sample and anode planes and shown analytic solutions for the induced charge signals produced as they are collected;

**Fig. 12** shows a preferred embodiment of the invention as a gas filled, parallel plate ionization chamber with guard electrodes, field shaping electrodes, and reduced anode capacitance;

**Fig. 13** shows typical preamplifier output traces of charge signals induced on the anode during the collection of one ionization track emitted from the sample wall of the detector shown in **Fig. 12** and one ionization track emitted from the detector's backwall; and

**Fig. 14** shows a scatter plot of pulse risetime versus pulse amplitude for a series of 10,000 ionization tracks emitted from the sample wall and 10,000 ionization tracks emitted from the anode backwall for the detector shown in **Fig. 12**

DESCRIPTION OF SPECIFIC EMBODIMENTS

1. Introduction

The invention exploits the differences in preamplifier pulse features that result from collecting ionization tracks generated by alpha particles emitted from different surfaces within the counter, and uses pulse feature analysis to recognize these differences and so distinguish between alpha particles emitted from the sample and "background" particles emitted from the surfaces of the counter itself.

As a matter of nomenclature, the term "region of emanation" denotes the region within the chamber volume where the ionization track originates. When the sample emitting an alpha particle lies outside the chamber, the region of emanation is where the alpha particle enters the chamber, e.g., window **4** in **Fig. 1.** If the sample is inside the chamber, the region of emanation is the sample itself. In either case, the ionization track within the chamber is considered to have a region of emanation corresponding to the sample region, i.e. the region of the chamber volume at or near which a sample is to be located. Conversely, when an alpha particle is emitted from other chamber surfaces, its region of emanation is named after the region from which it is emitted.

While, strictly speaking, only the alpha particle ionization track emanates from the sample region or from another chamber surface, it is convenient to also associate the region of emanation with the preamplifier pulse that results from collecting the track charge on either the anode or guard electrode. Thus, when we refer to the pulse as having a region of emanation; this is merely shorthand for the region where the alpha particle's ionization track originated in the chamber.

While this analysis can be used with some existing chambers, it is preferred to construct, provide, or operate a gas-filled counter in such a manner as to exaggerate the degree that the preamplifier pulse features differ as a function of the region of particle emanation. The pulse feature analysis is then even better able to recognize these differences and so distinguish between alpha particles emitted from the sample and "background" particles emitted from the surfaces of the counter itself. To illustrate the method, we describe two preferred embodiments: a multi-wire counter and a parallel plate design.

A secondary technique, using guard electrodes, further reduces background counting rates by identifying and eliminating counts from the chambers' sidewalls, and this method is described for both preferred embodiments. Tertiary methods to further enhance the performance of the parallel-plate design by increasing the uniformity of its electric field, reducing the capacitance of its anode, and employing low alpha emitter construction materials are also described.

The description below is organized as follows: **§2** presents the multi-wire gas filled counter, including guard wires; **§3** presents the parallel plate design, including guard electrodes; and **§4** discusses detector operational issues.

2. Multi-Wire Gas-Filled Detector Embodiment

2.1. Detector Description

**Fig. 2** shows an embodiment of the invention as a multi-wire counter **30** comprising a manifold **33** containing an anode **40** of multiple wires separated by distance **42 S** and sealed by a plate **35** upon which the same sample **20** as in **Fig. 1** rests. This design differs from the counter of **Fig. 1** as follows. First, the anode wire diameter is 5 to 10 times larger (e.g. 0.40 mm) so that, at operating voltage, the counter operates in the ionization chamber mode and not in proportional counter mode. This causes the charges induced on the anode by ionization tracks drifting within the chamber to be sensitive to the ionization track's origin and drift path. Secondly, if $R_{max}$ is the range of the most energetic alpha particle expected, then the manifold is sized so that the distance R from sample **20** to the anode **40** is significantly longer (typically 25-30%) than $R_{max}$ and the distance B to the backwall **44** is only a fraction (typically 1/3 to 1/4)of R. We note that, while conventional detectors may sometimes be similarly dimensioned, they are not designed so with the express intention of producing different charge collection times for particles originating from different locations within the chamber. The chamber is operated in flow mode, with connections **47** and **49** allowing the entrance and departure of the operating gas, shown here as nitrogen. In this embodiment, the sample is therefore within the counter volume.

The bias and electronics for the counter of **Fig. 2** are identical to those used with the detector of **Fig. 1,** and are identically numbered. In our preferred implementation, the amplifier **13,** discriminator **15,** and counter **16** of **Fig. 1** are replaced by a digital processor and counter **50.**

### 2.2. Ionization Chamber Operating Mode

The counter is operated in ionization chamber mode, with voltage V **8** chosen so that the time $t_{eR}$ required for an electron to cross R from sample **20** to the anode **40** is a few tens of microseconds. The diameter of the anode **40** wires is then chosen so that no charge multiplication occurs in its vicinity.

The difference between lengths B and R is important to the counter's operation. The electron transit time $t_{es}$ across a distance s biased by a voltage V scales as $s^2/V$ in the parallel plate approximation. Thus, if R/B is, for example, 3, then $t_{eR}$ will be 9 times the transit time $t_{eB}$ across B from the chamber backwall **44** to the anode. We chose $t_{eR}$ to be a few tens of microseconds, so $t_{eB}$ is only a few microseconds, a significant difference.

As is well known, the fields in wire chambers are not uniform, but distort in the region of the anode wires. In the present design, where S is relatively small, of order 10% of R, the electric field will be uniform over most of R, becoming non-uniform only within distances comparable to S from the anode allowing the difference between $t_{eR}$ and $t_{eB}$ to be maintained.

### 2.3. Signal Descriptions

#### Sample Source Signals

An ionization track **23** created by an alpha particle **22** emitted from the sample **20** ends a distance R' from the anode **40.** R' is always larger than zero by design, since R is greater than $R_{max}$. As this charge drifts in the uniform field, it induces a linearly increasing charge on the anode. Once collected, it ceases to induce any further charge. Close to the anode wires however, the signal shape is difficult to predict accurately. Whether the final result is an upward signal curvature, as shown in the trace **51** in **Fig. 2,** or a downward curvature depends in some detail on the length of the track, its angle to the sample, the spacing of the anode wires, and the applied voltage.

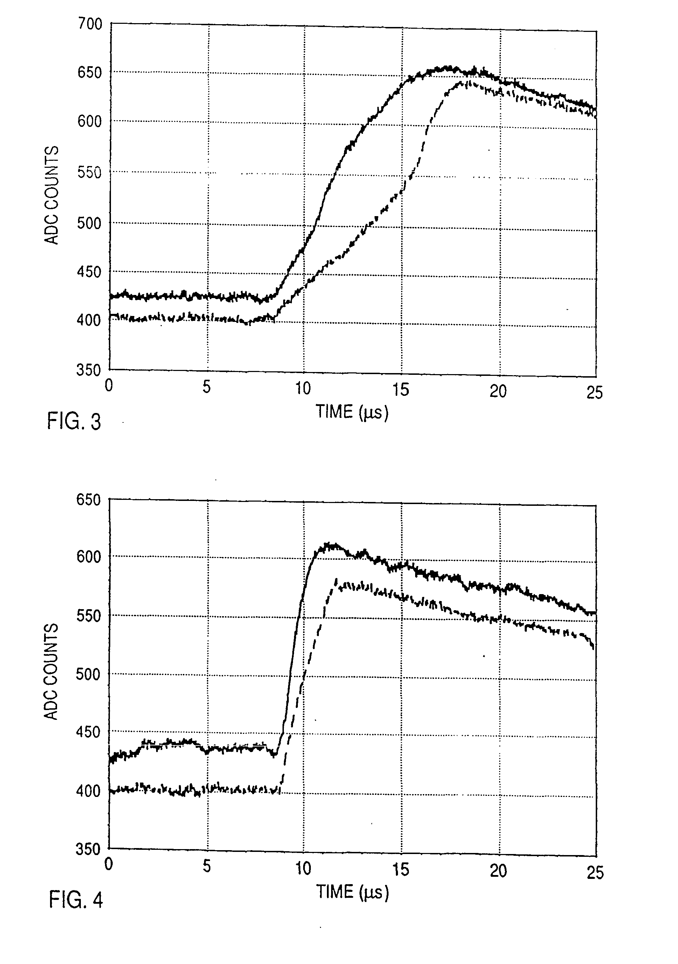

**Fig. 3** shows two sample source alpha traces from a multi-wire counter which had B and R values of 1.5 cm and 3.5 cm, respectively. While this ratio is less than ideal, compared to the specifications of **Fig. 2,** it is still adequate for the purpose. A small $^{241}$Am alpha source was placed within the chamber at the center of the sample region and traces were recorded using a digital signal processor with trace capture capability, the XIA DGF-4C. The two traces have significantly different shapes, per the discussion of the previous paragraph. However, their total charge collection times are identical, about 8.0 $\mu$s, and their initial slopes are comparable, being about 25 charge units/$\mu$s.

#### Backwall Source Signals

An alpha particle emitted from the backwall **44** creates an ionization track **25** ending a distance R~ from the anode **40,** where R~ may be either positive or negative, depending upon the total track length and its angle of emission from the backwall. Initial charge collection will be much faster for these signals, both because the field $E_B$ in the backwall region is much higher and because any charge in the vicinity of the anode wires will also be collected rapidly due to the high fields in this region. Only charges deposited well into the source side volume will be initially collected more slowly and, by construction, this amount of charge is limited. The maximum collection times for backwall signals will come from tracks that penetrate maximally into the source side volume and, by construction, these times will always be less than about half $t_{eR}$.

**Fig. 4** shows two backwall traces obtained by placing the alpha source on the detector backwall surface. The two collection times are different, but both (2.5 and 3.3 $\mu$s, respectively) are over two times faster than the sample wall collection times. Initial slopes are about 100 charge units/$\mu$s, four times larger than in the sample wall case.

Anode Source Signals

Traces from alpha tracks **27** emanating from the anode wires **40** will look much like backwall traces, since they originate within the high field regions near the anode wires. Half of these traces will penetrate into the backwall space, further contributing to their rapid charge collection characteristics. Those that penetrate into the sample space will be collected more or less quickly, depending upon their angle to the anode plane. Only those nearly perpendicular to it will have long total charge collection times, which will still be significantly shorter than $t_{eR}$ since dimension R significantly exceeds $R_{max}$. Anode wire source events will therefore be distinguished from true sample source events by both their large initial slopes and shorter overall collection times.

2.4. Signal Discriminations

Charge collection times and initial slope values are fully adequate to discriminate between signal pulses according to their points of emanation in our preferred embodiment and detailed signal shape descriptions are not required. In particular, all signals generated by alphas emanating from the sample wall will share two characteristics. First, their total charge collection time is invariant and is given by $t_{eR}$, since at least some track charge is created immediately next to the sample surface. In the design of Figure 2, $t_{eR}$ is about a factor of about 9 less than the typical value of $t_{eB}$ from backside collection and at least 25% smaller than the slowest collection from the relatively rare anode source events. Thus charge collection time (pulse risetime) is a first good test for discriminating point of emanation. Second, their initial slope $S_0$, before charge collection commences, is proportional to the field $E_R$ across R, which is lower than the field $E_B$ across B by a factor of about three and also much smaller than the fields close to the anode wires. Hence initial slope is a second good test for discriminating point of emanation.

The slope test can be improved by dividing So by the total track charge $Q_T$, as the ratio $S_0/Q_T$ depends only on $E_R$ at the point of emanation, whereas So also depends upon the track charge and may vary if different energy alpha particles are present. The ratio $S_0/Q_T$ becomes superior to So as a test for discriminating point of emanation when the range of alpha particle energies present within the chamber becomes large enough so that the smallest backwall So (the smallest backwall track charge times $E_B$) overlaps the largest sample wall So (the largest sample charge times $E_R$) and the simple So test can no longer unambiguously resolve the emanation point in all cases.

We note that our ability to discriminate between backwall and sample wall emanation points depends primarily on placing the anode to break the symmetry of the counting chamber. Here we have two (backwall and sample) planes whose separation is S. By setting the inequalities B < R/3 and R > 1.25 $R_{max}$, we cause the output pulses from the two planes to acquire their distinguishable characteristics. If the anode lay at the symmetric location, B = R, then the pulses from the two sides would become identical and indistinguishable. Alternatively, if we reversed the roles of B and R (i.e. R < B/3 and B > 1.25 $R_{max}$) then the pulses would become distinguishable again, with sample wall tracks having fast collection times and backwall wall tracks would have slow constant collection times, etc. Thus it is the broken symmetry that leads to the ability to distinguish emanation points and not the precise arrangement we have described. In other, non-planar geometries, the same principle will apply and serve to guide the placement of the anode.

2.5. Emanation Point Discrimination

Digital Circuit for Determining

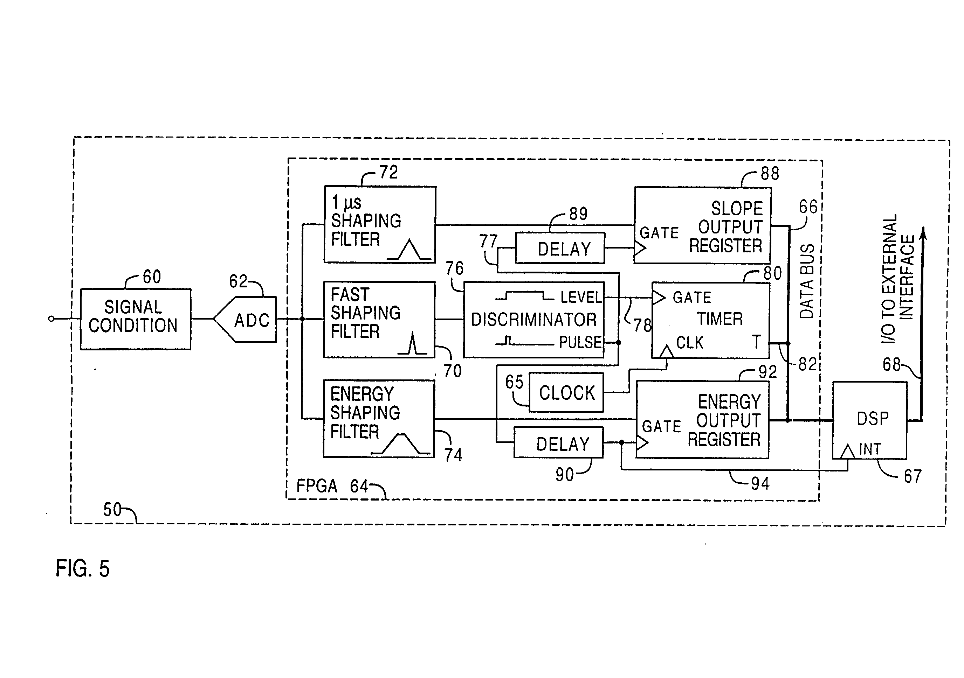

**Fig. 5** shows a block diagram of a digital processing circuit **50** that can perform the pulse shape analysis operations to determine alpha particles' points of emanation. The circuit comprises a section of analog signal conditioning circuitry **60** feeding an ADC **62** whose output is connected to a fast combinatorial logic circuit **64** implemented in a field programmable gate array (FPGA) that also accepts input from a clock **65** and has an output data bus **66** attached to a DSP **67**. I/O lines **68** connect the DSP to an external interface to display the processed data or send them to an external computer for further processing, display, and/or storage as may be required. The circuit topology is similar to that described in the U.S. Patent of Warburton and Zhou [WARBURTON - 1999] and the issues associated with its operation will be familiar to those skilled in the art of digital spectroscopy.

Within the FPGA **64** the ADC signal is split into three paths, going to a fast triangular shaping circuit **70,** an intermediate peaking time triangular shaping circuit **72,** and a long peaking time, trapezoidal "energy" filter **74**. The fast shaper **70** detects pulse signals in the preamplifier output. A peaking time of 400 ns worked well for the signals shown in **Figs. 3 and 4.** The intermediate triangular shaper, an averaging differentiator, measures the signals' initial slopes. Since a slope measurement after about 1 $\mu$s was found to give good differentiation between the two kinds of signals in **Figs. 3** and **4,** we set this shaper's peaking time to 1 $\mu$s, and capture its output value about 1 $\mu$s after the pulse is detected. The gap time $t_g$ for the slow "energy" filter **74** is set to be as long as the slowest risetime signal to be measured, 8 $\mu$s in the present case. Its peaking time $t_p$ is not critical, since energy resolution in gas detectors is limited by charge induction fluctuations and not electronic noise. In the work shown, 4 $\mu$s was used, but values from 1 to 8 $\mu$s also work acceptably. The word "energy" has been placed in quotation marks because this actually only measures the pulses' amplitudes, which also strongly depend upon charge collection times. However, by convention, we will often refer to this as an energy measurement and, by extension, often speak of the "energy" of a pulse with the understanding that we have really only measured its amplitude.

The fast shaper **70** feeds a discriminator **76** that has two outputs: a pulse output **77** that goes high for one clock cycle when the fast shaper output first exceeds threshold, and a level output **78** which goes high at the same time, but stays high as long as the fast shaper output exceeds threshold. The level output **78** gates timer **80**, which counts pulses from the clock **65** to measure time T **82** above threshold, which is then our measurement of the total charge collection time. Pulse output **77** is delayed for 1 $\mu$s by delay **89** and then gates slope output register **88** to capture the output of the intermediate triangular shaper **72** as a measurement of the signal pulse's initial slope. Pulse output **77** is also delayed for time $t_p + t_g$ by delay **90** to trigger energy output register **92** to capture the output of the trapezoidal energy filter **74** as a measure of the signal pulse's amplitude. This delayed pulse **94** can also be used to interrupt the DSP **67**, signaling it that a pulse has been detected and that captured time, slope, and energy values can be read from the timer **80** and output registers **88** and **92** over the data bus **66**. The DSP **67** completes the measurement by applying cuts (inequality tests) to the measured charge collection time and initial slope (or initial slope divided by energy) to identify the pulse as having originated at the sample or backwall and then, if desired, producing energy spectra for either or both types of pulses.

While our preferred embodiments employ a digital processing circuit **50** to discriminate between different points of alpha track origin, it is clear that these functions could be implemented using classical analog processing functions as well. All of the filters **70, 72,** and **74** could be replaced by analog shaping filters, discriminators **76** are common analog components, as are track and hold circuits to replace the output registers **88** and **92**. A time to amplitude converter would replace timer **80**, and analog pulse delays could be used to replace both the delays **89** and **90**. The ratio of slope over energy could be produced with an analog multiplier circuit and the comparisons to threshold values also done with analog comparators. All of these analog functions are readily available from nuclear spectroscopy equipment dealers. But because they may be carried out digitally more cheaply, compactly, and with less power consumption, we have chosen that path as generally preferable. Other digital implementations are possible as well and, in some cases can provide superior results. The energy filter, for example, would produce more accurate results if its gap were matched to the pulse risetime on a pulse-by-pulse basis.

Processed Source Test Data

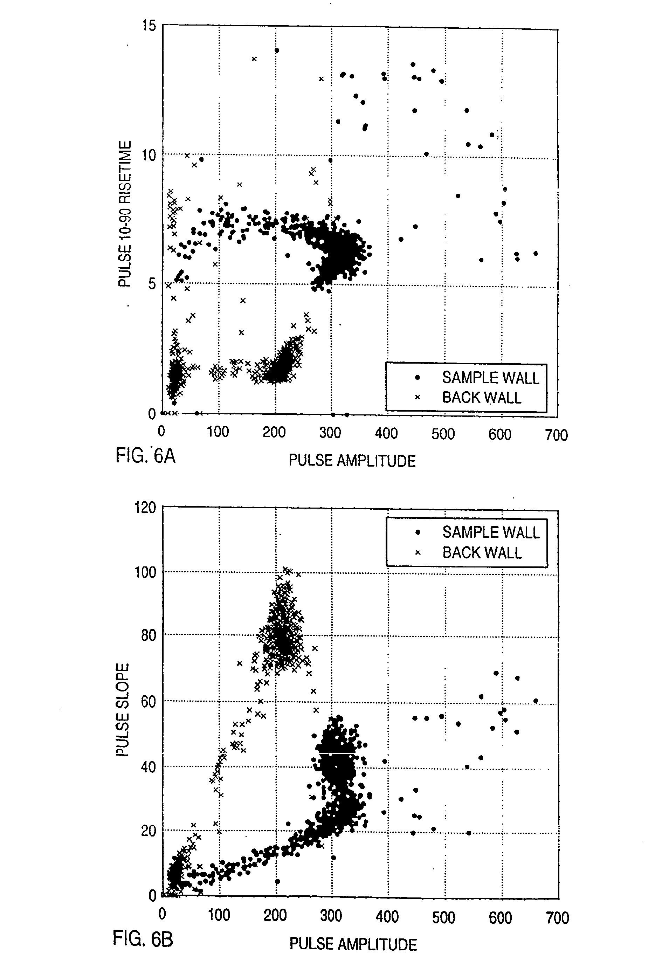

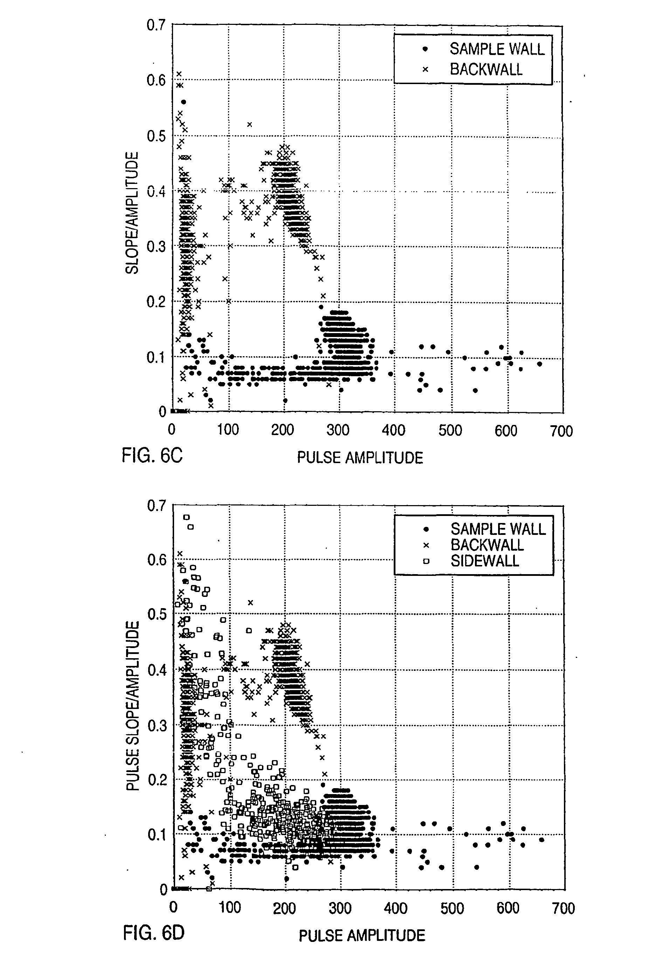

To test the method of the preceding paragraphs, we placed an Am-241 alpha source at several locations within the detector and captured traces using an XIA DGF-4C digital signal processor with trace capture capability. We then analyzed the traces off-line using the algorithms similar to those presented in **§2.5.1. Fig. 6** shows results for 1000 pulses each from a typical source wall location and a typical back wall location. **Fig. 6A** plots pulse risetime versus final pulse amplitude. As **Fig. 6A** shows, pulses from the two locations separate fairly cleanly into two distinct regions for pulses with amplitude above about 50.

The logical test "(IF(pulse amplitude greater than 50) AND (IF(pulse risetime greater than The greater greater 4.5))" discriminates against back wall events with 98-99% accuracy, allowing the counter background from these events to be reduced by two orders of magnitude.

**Fig. 6B** shows initial pulse slope, measured over the first microsecond of the pulse, plotted against pulse amplitude for the same set of signals as in **Fig. 6A.** Data from the two sources separates even more cleanly into two regions than in **Fig. 6A,** but a more complex logical test is required to separate them, since pulse slope is clearly proportional to pulse amplitude. Therefore, in **Fig. 6C** we plot initial pulse slope divided by final pulse amplitude versus final pulse amplitude. This plot very cleanly differentiates between the two different sources of ionization tracks. The logical test "(IF(pulse amplitude greater than 80) AND (IF(slope/amplitude less than 0.19))" discriminates against back wall events with 99.8% accuracy (2 back wall events in 1000 sample events), allowing counter background from these events to be reduced by three orders of magnitude while maintaining about 98% efficiency for sample wall events (23 events with magnitude below 80).

These tests, however, are not so effective in discriminating against ionization tracks emanating from side wall location. **Fig. 6D** shows 1000 events from a source located on the detector side wall overlaid on the plot of **Fig. 6C.** These events, depending upon their ionization track trajectories, can clearly be mistaken for either source wall or sample wall events. Additional means to discriminate against sidewall pulses would therefore be beneficial.

### 2.6. Guard Wire Addition

#### Sidewall Source Signals

For detectors designed per the specifications of **Fig. 2,** sidewall area will be comparable to backwall area. Dimension B plus R will typically be about 10 cm. For a 1000 cm2 detector (35 cm x 35 cm) the backwall area will then be 1225 cm$^2$, compared to the sidewalls' area of 1400 cm$^2$. **Fig. 2** shows the track **26** of an alpha particle emanating from the sidewall, headed toward the sample. Tracks like this will generate signals similar to signals from tracks emanating from the sample. Tracks that actually hit the sample will produce identical tracks. Similarly, tracks headed toward the backwall produce signals similar or identical to backwall signals. Sidewall tracks are thus extremely variable and are not easily separated using the tests applied to **Fig. 6C.**

#### Design of Chamber with Guard Wire

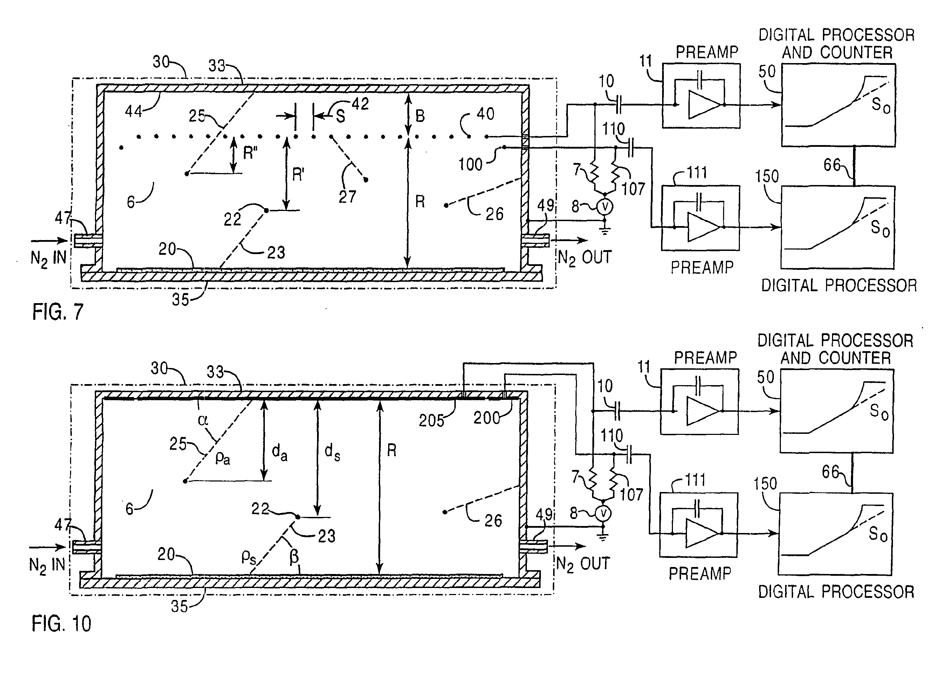

**Fig. 7** repeats **Fig. 2,** but modified by the addition of a guard wire **100** that surrounds the perimeter of the anode. This guard wire may either be in the same plane as the anode **40** or separated slightly from it, as shown. The guard wire **100** is biased similarly to the anode **40** via resistor **107** from voltage source **8** and connected to preamplifier **111** via capacitor **110.** Preamplifier signals are then fed into a second digital processor **150.** The digital processor **150** is a stripped down version of digital processor **50,** lacking (by reference to **Fig. 5)** the clock **65,** shaping filter **72,** slope output register **88,** DSP **67,** and the control lines **68** and **94.** Instead, the guard wire processor **150** takes its clock signal from anode processor **50,** so they run synchronously, and its data bus is an extension of the anode processor's data bus **66** so that the anode processor's DSP **67** can record values captured by the timer and energy output register in the guard wire processor. **150**

#### Sidewall Emission Point Signals

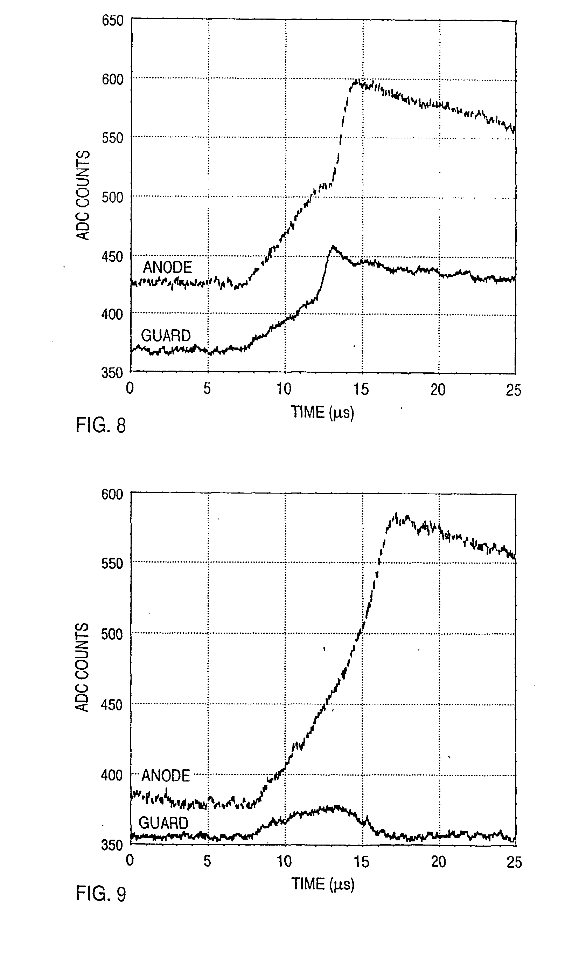

To view sidewall signals, we modified our **Fig. 2** detector by the addition of a guard wire, per **Fig. 7,** placed an Am-241 alpha source on a sidewall, and captured both anode and guard wire signals using our XIA DXP-4C module. **Fig. 8** shows such a pair of traces. The anode trace rises in about 5 $\mu$s, which might or might not pass the risetime test as a sample emission pulse. The significant guard wire signal, however, could easily be used to identify this as sidewall emission pulse and reject it. The breaks in the two curves occur as charges are first collected on the guard wire and then on the anode and cease inducing charge on the other electrode.

#### Sample Emission Point Signals

We also measured signals in the **Fig. 7** detector with the source placed close to the edge of the sample area. Some tracks from this source location will head back toward the center of the anode, some will go straight down and some will pass over the guard wire. The latter will induce charge on the guard wire and be rejected. This loss of source counting efficiency is a penalty we must pay for eliminating sidewall counts, since the tracks are indistinguishable. More sophisticated tests allow the other two cases to be counted and not rejected. **Fig. 9** shows a trace from this source location where no net charge is collected on the guard wire. The anode trace clearly passes both collection time and initial slope tests as a sample signal. A simple discriminator test on the guard wire signal, however, would reject it. Noting that no net charge is collected, we can also capture energy filter values from the guard wire signal processor **150** and specify the sidewall veto test logic to be "((IF(guard wire collection time greater than zero) AND (IF(final guard wire collected charge greater than zero))". This test maximizes sample source counting efficiency while rejecting the side wall events in **Fig. 6D** and returning to the discrimination ratios shown in **Fig. 6C.**

### 2.7. Design Summary

Our preferred embodiment as a multi-wire gas counter is therefore the design in **Fig. 7,** which has sets of both anode and guard wires, each set having its own preamplifier and signal processor, as shown. The test for a good sample signal is that its charge collection time must exceed a first threshold AND its initial (slope/amplitude) must lie below a second threshold AND there is no guard wire veto signal, where a valid veto signal comprises having the veto wire collection time exceed a third threshold AND the veto energy exceed a fourth threshold. The four threshold values will be set to optimize performance based on the amplitudes of these signals for expected alpha particle energies and the observed noise properties of the preamplifier circuits.

2.8. Proportional Counter Operating Mode

Multi-wire counters are often operated with proportional gain, since this produces larger signals, but these signals are only produced as charge actually arrives at the anode (or guard) wires. Since, in detectors with the drift field asymmetry of **Fig.** 7, charge collection times will generally be slower for ionization tracks originating from the sample than from the backwall the invention method can still be applied to increase backwall event rejection. However, since collection times will be modified by track orientation, poorer rejection will result than in the preferred embodiment. Sidewall event rejection using guard wire signals will still be good.

3. Parallel Plate Ionization Chamber Embodiment

The previous section described a preferred embodiment of our background reduction invention as a multi-wire gas detector, and this embodiment works very well. Microphonic noise from wire vibrations is a issue, however, since we are operating without gas gain. While these may be suppressed by appropriate construction techniques, this adds complexity and makes it harder to assure that no additional alpha contamination is introduced.

3.1. Detector Description

Our second preferred embodiment as a parallel plate ionization chamber offers three practical advantages. First, with proper plate design, the microphonics disappear. Second, by embedding the plates in their supporting medium, it becomes possible to design a detector which may merely be cleaned if it becomes contaminated, rather than having to be rebuilt. Third, for large area detectors, parallel plates have lower capacitance than a wire array of the same area, which increases signal to noise ratios, simplifies preamplifier design, and increases detector sensitivity.

**Fig. 10** shows a first embodiment of our invention as a parallel plate ionization chamber that is quite similar to the **Fig. 7** design, except that the guard wires **100** and anode wires **40** have been replaced by a guard strip **200** and anode collection plate **205.** The rest of the design is identical and identical part identification numbers have been used to emphasize this.

3.2. Signal Descriptions

The signals produced in this detector will be generally similar to chose produced in the **Fig. 5** detector and similar means may be employed to distinguish between ionization tracks emanating from the sample and chamber backwall and to reject those emanating from the chamber sidewalls. Moreover, since the electric field can be nearly uniform everywhere within the chamber, the charge collection signals can be expressed analytically to optimize attainable rejection margins.

Analytic Solutions

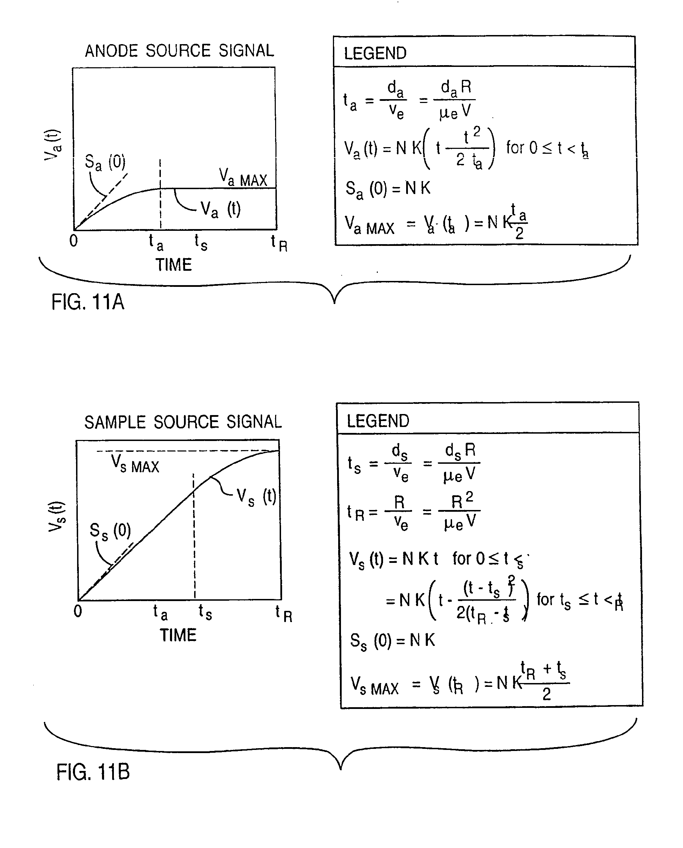

**Fig. 10** shows a first ionization track of length $\rho_s$ emanating from the sample at angle $\beta$ and a second track of length $\rho_a$ emanating from the anode at angle $\alpha$, their points of maximum extent lying distances $d_s$ and $d_a$ from the anode plane, respectively, R being the anode-to-sample separation. **Figs. 11a** and **11b** show the analytic solutions for their associated preamplifier output signals $V_a(t)$ and $V_s(t)$, where N is the number of electrons in the full track and $k = e\,v_e/RC_f$, with the electron velocity $v_e = \mu_e E = \mu_e V/R$, $\mu_e$ being the electron mobility in the detector gas, E the electric field and V the applied voltage. The electron charge is e, and $C_f$ is the preamplifier feedback capacitor.

Charge Collection Time Discrimination

As before, all sample signals have the same duration, $t_R = R/v_e$. The longest signal from an anode alpha track will last $t_{aMAX} = \rho_{MAX}/v_e = R\rho_{MAX}/\mu_e V$, where $\rho_{MAX}$ is the maximum expected anode alpha track length. The difference between $t_{aMAX}$ and $t_R$ is then

$$\Delta t = (R - \rho_{MAX})R/\mu_e V \qquad\qquad (1)$$

R and V are then adjusted to achieve both a comfortable $t_R$ and an easily distinguished difference $\Delta t$. For example, making $R = 3 \times \rho_{MAX}$, produces a three-to-one ratio between $t_R$ and $t_{aMAX}$. For a typical 3.5 cm $\rho_{MAX}$, V is easily adjusted to get $t_{aMAX}$ equals 3.5 $\mu$s and $t_R$ equals 10.5 $\mu$s, which are easy times to separate and to work with as well.

Scaled Initial Slope Discrimination

From the equations in **Fig. 11a** and **11b,** two tracks with equal numbers of electrons have the same initial slope: $S_s(0)$ equals $S_a(0)$. Thus the value of slope alone cannot distinguish between them. However, if we divide by the maximum output voltage $V_{MAX}$, or "energy" as measured by our energy filter, we find:

$$S_s(0)/V_{sMAX} = 2/(t_R + t_s) \qquad (2a)$$

$$S_a(0)/V_{aMAX} = 2/t_a \qquad (2b)$$

and

$$[S_a(0)/V_{aMAX}]/[S_s(0)/V_{sMAX}] = (R+d_s)/d_a = M \qquad (2c)$$

For tracks of length p, the least margin M occurs between the minimum anode scaled slope ($d_a$ = p) and the maximum sample scaled slope $(R+d_s)$ = 2R-p, which, for the design criterion from the previous section R = 3 $\rho_{MAX}$, gives $M_{MIN}$ = 5, so the two sets of values are always well separated. Thus, just as in the multi-wire detector case, we have two different tests for distinguishing between sample and anode tracks.

While, in our preferred implementations, we have focused on initial slope values, the pulse's slope at later times continues to carry information and could also be used in our discrimination tests. In other implementations with different internal electric fields, slopes or scaled slopes at later points in the pulse may be more appropriate to test.

3.3. Additions to Improve Performance

The parallel plate ionization chamber shown in **Fig. 10** becomes our preferred parallel plate embodiment with the addition of the following three improvements.

Field Uniformity Enhancement

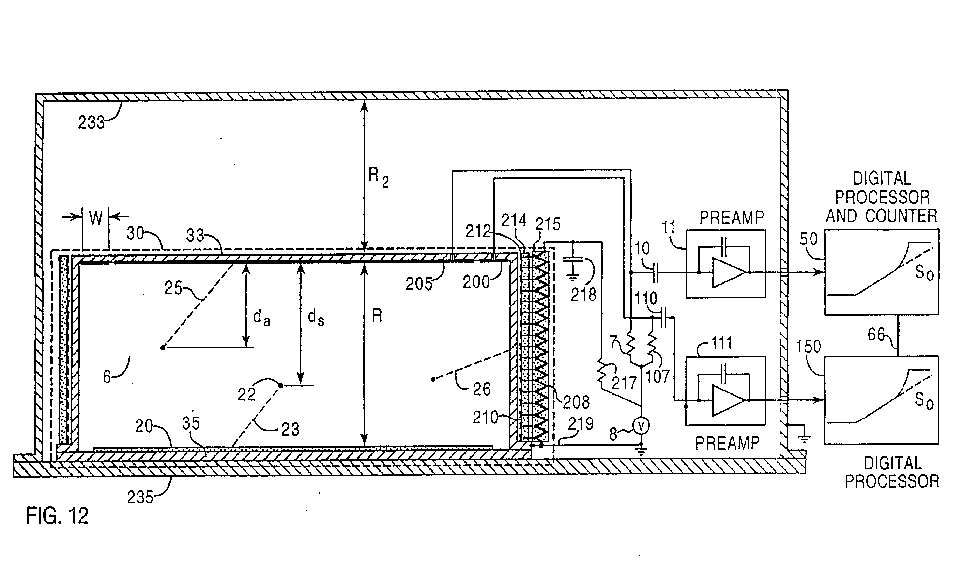

The geometry of the detector **Fig. 10** will not have truly uniform electric fields in its interior because the plates are too far apart, compared to their lateral dimensions and different fields result in different charge collection times which and reduce rejection margins. Increasing the guard electrodes' width W would increase field uniformity, but at the cost of greatly increasing the chamber's active volume. In our preferred embodiment, **Fig. 12,** we have therefore added a field shaping electrode **210** surrounding the parallel plate chamber **30.** This electrode can be easily manufactured, for example, as a series of stripes **212** on a printed circuit board **214,** each attached to a node on a resistor divider chain, **215** which is connected to the voltage source V **8** at its anode end via an isolating resistor **217** and capacitor **218,** and to ground via a lead **212** at its sample end. Equal valued resistors in the divider chain **215** cause the voltage at the surface of the shaping electrode **210** to smoothly pass from V at its anode end to ground at its sample end, which, in turn, forces the electric field a short distance into the chamber to lie parallel to the shaping electrode's surface, provided the chamber manifold **33** is made of a non-conducting material.

Performance of the Preferred Embodiment

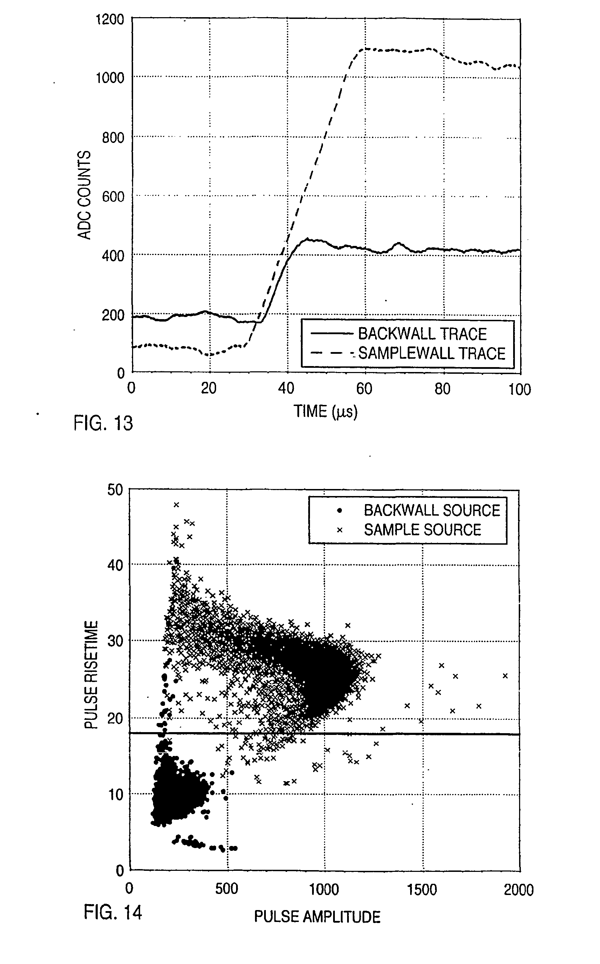

**Fig. 13** shows typical signals from sample wall **20** and anode backwall **205** ionization tracks. For equal alpha particle energies they are very different. The sample wall trace is three times larger than the backwall trace and has nearly three times the risetime, 28 $\mu$s compared to 10 $\mu$s. These differences make the two emission sources very easy to separate. **Fig. 14** shows a scatter plot of 10,000 Am-241 sample wall traces and an additional 10,000 anode backwall traces The shown risetime cut at 18 places only 24 backwall traces and about 75 sample traces on the wrong side of the line. The 24 backwall correspond to a rejection ratio of 99.76%. The 75 lost counts correspond to a 99.25% counting efficiency. More complex data cuts using both risetime and amplitude information can do much better (e.g. the cut between risetime equals 30 and pulse amplitude equals 1500 yields a rejection ratio of 99.95%), but even the simple cut illustrates the invention's basic principle.

Anode Shielding and Capacitance Reduction

When the anode area is large, it becomes an excellent antenna for picking up environmental interferences. To minimize this, the entire counter must operate within a grounded enclosure, comprising a cover **233** and a base plate **235.** This enclosure is kept a distance $R_2 \approx R$ from the anode **205,** to minimize added anode capacitance and resultant preamplifier input noise.

Environmental Background Suppression

Finally, a good way to minimize background counts is to begin with as few as possible. Therefore we construct the inside of the parallel plate chamber using low alpha emitting materials. The preferred embodiment requires only two materials within the chamber: the chamber wall material itself and the anode/guard conductor material. We have found that plastics work well for the chamber material, being naturally low Z materials and not prone to alpha emitter contamination. Various choices are possible for the anode electrodes, including certain stainless steels [KNOLL - 1989, pp. 724-725] or ultra-low alpha emitting N. [BROWNE - 1999] Finally, either the anode, **205** guard electrode, 200 or the sample mounting surface **35** can be made out of semiconductor grade Si, which is hyper pure and still has adequate conductivity for the purpose.

3.4. A Construction Note

Measurement chambers become contaminated by the materials they measure. With prior art systems, this is tolerated up to a point and then the detector chamber has to be rebuilt. Our parallel plate design, however, may be constructed so that its internal surfaces are Smooth and free of cracks and crevices which would trap contaminating materials and so can be easily cleaned if contaminated. For example, the anode and guard strip electrodes can be embedded into the plastic of their chamber wall support surface by heating the plastic into a semi-molten state or they may be applied to the chamber wall material as very thin layers by vapor deposition. Thus, when the counter chamber becomes contaminated during the course of operation, it may be cleaned by simple washing procedures. This is an important benefit, as it allows the detector to be employed with a wider range of sample materials than might otherwise be risked.

4. Other Performance Issues

The following issues need to be considered when operating either of the preferred embodiments.

Operating Gas and Initial Purging

The electron affinity of the operating gas must be small, however, so that it does not trap the drifting electrons. [KNOLL - 1989, pp. 168-169] This excludes oxygen and water vapor. While any of the conventional proportional chamber gases could be used, their quenching behavior is not required because there is no charge multiplication. Thus we have found $N_2$ as $LN_2$ boil-off gas to be convenient, as it is cheaply available without water vapor contamination. Its low Z also reduces its sensitivity to environmental gamma rays, muons in cosmic rays, and any beta particle emitters, further contributing to a low background counting rate. We typically purge the chamber at high volume for a few minutes to remove atmospheric $O_2$ and then lower the flow for the duration of the measurement.

Atmospheric Radon

The atmosphere typically contains Ra at about 2.4 pCi/liter or 320 d/l-hr. [KNOLL -1989, pg. 725] This would produce an initial counting rate of about 1.2 alpha particles per second (4200/hour) in our 13 liter chamber volume. Purging the chamber to remove atmospheric $O_2$ therefore has the important secondary benefit of flushing most of the radon and its daughter products from the chamber.

Sample Placement: Inside or Outside the Chamber

Thin windows make it difficult to operate prior art multi-wire counters. The sample has to be close to the windows since the range of alpha particles in air is very limited, but tearing or puncturing the window means rebuilding the detector. In our preferred embodiments, solid samples are placed directly inside the chamber, avoiding both alpha absorption losses in the atmosphere and the issues associated with thin windows. Chamber purging times are only a few minutes and typically insignificant compared to the counting times required for very low activity samples.

When the sample would certainly contaminate the chamber, as with powder or liquid samples, they can still be placed within the preferred embodiment detectors by covering them with a very thin foil of metallized window material. Or, indeed, one could revert to the prior art thin window design, if this offered a benefit in a particular case. The described method, clearly, does not depend upon whether the sample is physically within the chamber or not.

## 5. REFERENCES

- BROWNE -1999: "Low-background 3He Proportional Counters for Use in the Sudbury Neutrino Observatory", M.C. Browne et al. in IEEE Transactions on Nuclear Science, Vol. 46, No. 4, pp. 873-876 (August 1999).
- IICO - 1999: "Model 1950 Alpha Counter", Product Literature (IICO/Spectrum Sciences, Saratoga, CA, 1999).
- ITRS - 1999: "International Technology Roadmap for Semiconductors, 1999 Edition", (SEMATECH, Austin, TX, 1999), p. 235.
- KNOLL -1989: "Radiation Detection and Measurement, 2nd Ed." by Glenn F. Knoll (J. Wiley, New York, 1989), pp. 131-159 (Chapter 5); pp. 160-198 (Chapter-6), pp. 724-725.
- ORTEC - 1998: "Introduction to Charged-Particle Detectors" in EG&G Ortec 97/98 Catalog "Modular Pulse-Processing Electronics and Semiconductor Radiation Detectors" (EG&G Ortec, Oak Ridge, TN, 1998), pp. 1.8-1.16.
- WARBURTON -1999: U.S. Patent No. 5,873,054, issued Feb. 16, 1999 to W.K. Warburton and Z. Zhou for "Method and apparatus for combinatorial logic signal processor in a digitally based high speed x-ray spectrometer".

## 6. Conclusion

In the foregoing description of specific embodiments we have shown a variety examples of the general technique of active background suppression in an alpha counter whereby, by analyzing the features of pulses output by the counter, the origins of the alpha particles generating these pulses can be accurately assigned either to the sample or else to some other surface within the counter and hence rejected as background counts. How many of these features would be analyzed in any particular application would depend upon both the design of the detector and what background rejection was required. Some of these features may have been analyzed before, as, for example, pulse amplitude is commonly determined as a method for measuring particle energies. One of the inventive steps taught here is, instead, to use the results of the analysis specifically to determine each alpha particle's point of emission and hence to categorize it as either "signal" or "background."

Therefore, the foregoing description of specific embodiments has been presented for purposes of illustration and description. It is not intended to be exhaustive or to limit the invention to the precise forms described, and obviously, many modifications and variations are possible in light of the above teaching. These embodiments were chosen and described in order to best explain the principles of the invention and its practical application to thereby enable others in the art to best utilize the invention in various embodiments and with such modifications as best suit the invention to the particular uses contemplated.

While the above is a complete description of several specific embodiments of the invention, including methods for exaggerating the differences between pulse features produced by alpha ionization tracks originating in different locations within the detectors, other modifications, alternative constructions, and equivalents may be used.

As a first example, the method could be applied to many existing alpha counters, since their internal geometries are typically not symmetrical and, even operated in proportional mode, they produce recognizable differences between particles originating from different interior locations. The results might not be comparable to results from a specifically designed detector, but they might offer a significant improvement over purely passive operation.

As a second example, while we typically measured multiple pulse features, it is clear that in some cases only a single measurement would provide improved background rejection. E.g. when only a limited range of alpha particle energies is present and the sample to the anode drift distance is much larger than the backwall to the anode drift distance, pulse amplitude alone (the simplest "shape" characteristic) would suffice to distinguish between the two cases.

As a third example, the described counters all had rectangular geometries, while cylindrical or, indeed, arbitrary geometries could be employed.

As a fourth example, while the specific embodiments employed digital processing logic, all of the described functions could also be implemented using analog processing techniques.

As a fifth example, while we operated our counters as windowless flow counters with initial purging, the invention does not require this. They could also be operated as sealed windowed counters when it was advantageous to do so.

As a sixth example, while the described embodiments employ real time processing, the traces could instead be digitized and processed equivalently using an off-line computer.

As a seventh example, while the described embodiments employ three shaping filters, other numbers of filters could clearly be used. For example, if, to improve noise performance, the peaking time of the fast shaping filter 70 needed to be increased until it approached the value of the slope measuring filter 72, then clearly a single digital filter could serve both functions.

Therefore, the above description should not be taken as limiting the scope of the invention, as defined by the appended claims.

**Claims**

1. A method of operating a gas-filled alpha counter that includes a gas-filled chamber having a sample region, an anode disposed in the chamber to collect charges in the chamber, a preamplifier connected to the anode to receive the charge collected thereon, and a voltage source configured to, in use, apply a bias to the anode such that, whenever an ionization track is generated by an alpha particle passing through the gas within the chamber, the electrons in the track are collected by the anode and are received by the preamplifier to cause the preamplifier to produce an anode output signal pulse associated with the alpha particle, wherein the chamber and the anode are configured such that ionization tracks emanating from different surfaces of the counter produce characteristically different anode output signal pulses, the method comprising, for at least some pulses:

   measuring one or more features of the anode output signal pulse that differ depending on the surface of emanation of the alpha particle associated with the anode output signal pulse; and
   determining, based on the measurement of the one or more features of the anode output signal pulse, the surface of emanation of the alpha particle associated with the anode output signal pulse.

2. The method of claim 1, and further comprising rejecting the pulse as background if it is determined that the pulse's associated alpha particle did not emanate from a surface corresponding to the sample region.

3. The method of claim 1 wherein at least one of said measuring and determining steps is carried out by analog processing circuits.

4. The method of claim 1 wherein the preamplifier output signal is conditioned and digitized by an analog-to-digital converter, and at least one of said measuring and determining steps is carried out by digital processing circuits.

5. The method of claim 1 wherein:

   the sample region is a specified region inside the chamber;
   the sample material whose alpha emission rate is to be determined is placed within the sample region; and
   if the sample material is capable of migrating within the counter and so contaminating it, the sample material is prevented from doing so by covering it with a piece of material that is thick enough to prevent the migration but thin enough to readily allow the alpha particles to penetrate into the volume of the counter.

6. The method of claim 1 wherein:

   the sample region is a region of the chamber adjacent a piece of window material that is thin enough to readily allow alpha particles originating outside the chamber to penetrate through the piece of material into the chamber; and
   the sample material whose alpha emission rate is to be determined is placed outside of the chamber and is separated from it by the piece of window material.

7. The method of claim 1 wherein the differences in the one or more anode pulse features that depend on the pulse's surface of emanation are exaggerated by constructing or operating the counter so that one or more of the following conditions are met:

   the counter operates in the ionization mode;
   substantially different electric collection fields are created proximate to different surfaces of alpha particle emanation;
   substantially different charge collection distances are created proximate to the different surfaces of alpha particle emanation;

the one or more electrode elements that comprise the anode are placed asymmetrically within the chamber; ionization tracks emanating from the different surfaces take different amounts of time to be collected; and ionization tracks emanating from the different surfaces generate different amounts of induced charge in the anode as they are collected.

8. The method of claim 1 wherein the chamber has sidewalls and further information about an alpha particle's surface of emanation is obtained by:

providing a guard electrode in the vicinity of the sidewalls coupling an additional preamplifier to the guard electrode;
biasing the guard electrode so that, whenever an alpha particle emanating from one of the sidewalls generates an ionization track, a fraction of the electrons in the track are collected by the guard electrode and cause the additional preamplifier to produce a guard output signal pulse; and
for at least some of the measured anode output signal pulses:

also measuring one or more features of the guard output signal pulses from the additional preamplifier that differ depending on the guard output signal pulse's surface of emanation;
determining, based on the measurement of the one or more features of the guard pulse, whether the associated ionization track emanated from one of the sidewalls; and
rejecting as background any alpha particles whose associated ionization tracks are identified as emanating from one of the sidewalls.

9. The method of claim 8 wherein the one or more features of the guard pulse include at least one of the following:

the guard output signal pulse's time of arrival relative to that of the anode output signal pulse; and
the final change in the guard output signal pulse's amplitude.

10. The method of claim 9 wherein, for the alpha particle to be rejected, the guard output signal pulse must arrive in coincidence with anode output signal pulse; and
the amount of total charge collected on the guard electrode must exceed a threshold.

11. The method of claim 8 wherein:

the anode is comprised of wires lying approximately within a plane;
the chamber is bounded in part by two nominally parallel walls, one of which is associated with the sample region;
the anode wire plane is nominally parallel to the walls but is asymmetrically placed in that it is significantly closer to one wall than to the other wall; and
the guard electrode comprises one or more additional wires enclosing the perimeter of the anode wires and lying in approximately the same plane.

12. The method of claim 8 wherein the anode and the sample region are both planes, approximately parallel to each other, and separated by a distance that is significantly longer than the range of the most energetic alpha particles to be found within the chamber; and
the guard electrode surrounds the perimeter of the anode and lies in the same or approximately the same plane as the anode.

13. The method of claim 12 wherein an additional field shaping electrode structure is used to increase the electric field uniformity in the volume between the anode and the sample region.

14. The method of claim 12 wherein the anode and guard electrode are embedded flush within a supporting insulator structure in such a manner that the resulting composite structure is free of cracks and voids and may be easily cleaned to remove such contaminating materials as may accumulate in the course of counter operation.

15. The method of claim 1 wherein the one or more features of the anode pulse include at least one of the following:

the pulse's duration;
the pulse's amplitude;
the pulse's slope; and

the pulse's slope divided by its amplitude.

16. The method of claim 15 wherein the duration is measured by a timer that is gated by a discriminator whose output goes high whenever its input exceeds a preset threshold, where the input to the discriminator is the preamplifier signal filtered by a shaping filter whose time constant is fast compared to a typical pulse risetime.

17. The method of claim 15 wherein the slope is measured by an averaging differentiator filter whose output is captured shortly after the pulse is initially detected.

18. The method of claim 15 wherein the pulse amplitude is measured using a trapezoidal filter whose gap is set to exceed the longest expected pulse 0-to-100% risetime and whose output is captured at a predetermined time after the pulse is initially detected.

19. The method of claim 15 wherein the pulse amplitude is measured by capturing the value of an averaging filter shortly after the pulse maximum is detected and subtracting from that value an output value of the same averaging filter captured shortly before the pulse is initially detected.

20. The method of claim 1 wherein the background counting rate is further reduced by constructing the alpha counter from materials having low alpha particle emission rates.

21. An alpha particle counter comprising:

a gas-filled chamber having a sample region;
an anode disposed in the chamber to collect charges in the chamber;
a preamplifier connected to said anode to receive the charge collected thereon;
a voltage source configured to, in use, apply a bias to the anode such that, whenever an ionization track is generated by an alpha particle passing through said gas within said chamber, the electrons in said track are collected by said anode and are received by the preamplifier to cause said preamplifier to produce an anode output signal pulse associated with the alpha particle;
wherein the chamber and the anode are configured such that ionization tracks emanating from different surfaces of the counter produce characteristically different anode output signal pulses; and a primary pulse feature analyzer configured to:

measure the one or more features of an anode output signal pulse that differ depending on the pulse's surface of emanation; and
determine, based on the measurement of the one or more features of the anode output signal pulse, the surface within the chamber from which the ionization track generated by the alpha particle emanated.

22. The counter of claim 21 wherein said primary pulse feature analyzer is further configured to reject the pulse as background if it determines that the pulse's associated alpha particle did not emanate from the sample region, thereby reducing the counter's background counting rate.

23. The counter of claim 21 wherein the counter has one or more of the following features of construction or operation that serve to produce or exaggerate the differences in said anode pulse features:

operation is in the ionization mode;
there are substantially different electric collection fields proximate to the different regions of alpha particle emanation;
there are substantially different charge collection distances proximate to the different regions of alpha particle emanation;
one or more of the electrode elements that comprise the anode are placed asymmetrically within the chamber;
ionization tracks from the different regions of alpha particle emanation have substantially different charge collection times; and
ionization tracks from the different regions generate substantially different amounts of induced charge in the anode as they are collected.

24. The counter of claim 21, wherein the counter has sidewalls, and further comprising:

a guard electrode in the vicinity of said sidewalls;
an additional preamplifier connected to said guard electrode;
an additional voltage source that biases said guard electrode so that said guard electrode collects electrons from ionization tracks and said additional preamplifier produces guard output signal pulses; and
a secondary pulse feature analyzer that:

measures the one or more features of said guard output signal pulses;
determines, based on the measurement of the one or more features of the guard pulses, additional information about the surface from which the pulse's associated alpha particle emanated; and
rejects the pulse as background if it determines that the pulse's associated alpha particle emanated from one of said chamber sidewalls, thereby reducing the counter's background counting rate.

25. The counter of claim 24 wherein, said secondary pulse feature analyzer rejects the alpha particle when it determines that:

the guard output signal pulse arrived in coincidence with the anode output signal pulse; and
the total amount of charge collected on the guard electrode exceeded a threshold.

26. The counter of claim 24 wherein:

said anode is comprised of wires lying approximately within a plane;
said chamber is bounded in part by two nominally parallel walls, one of which is associated with said sample region;
said plane within which said wires lie is nominally parallel to said walls but is asymmetrically placed in that it is significantly closer to one of said walls than to the other of said walls; and
said guard electrode is comprised of one or more additional wires that enclose the perimeter of the anode wires and lie in approximately the same plane.

27. The counter of claim 24 wherein said anode and said sample region are both planes, parallel to each other, and separated by a distance that is significantly longer than the range of the most energetic alpha particles to be found within said chamber; and
said guard electrode surrounds the perimeter of said anode and lies in the same or approximately the same plane and the anode.

28. The counter of claim 26, and further comprising an additional field shaping electrode structure that increases the electric field uniformity in the volume between said anode and said sample region.

29. The counter of claim 21 wherein said primary pulse feature analyzer includes means for determining one or more of the following:

the pulse's duration;
the pulse's amplitude;
the pulse's slope; and
the pulse's slope divided by its amplitude.

30. The counter of claim 29 wherein said primary pulse feature analyzer determines pulse duration using:

a shaping filter, whose time constant is significantly shorter than that of a typical pulse risetime;
a discriminator whose output goes high whenever its input from said shaping filter exceeds a preset threshold; and
a timer that is gated by the output of said discriminator.

31. The counter of claim 29 wherein said primary pulse feature analyzer determines slope using:

an averaging differentiation filter; and
means for capturing said filter's output shortly after the pulse is initially detected.

32. The counter of claim 29 wherein said primary pulse feature analyzer determines pulse amplitude using: a trapezoidal filter whose gap is set to exceed the longest expected pulse 0-to-100% risetime; and

means for capturing said filter's output at a predetermined time after the pulse is initially detected.

33. The counter of claim 21, and further comprising:

an analog-to-digital converter to digitize said preamplifier output signal; and a digital signal processing circuit implementing part or all of said primary pulse feature analyzer.

34. The counter of claim 33 wherein said digital signal processing circuit comprises at least:

a set of combinatorial logic, which carries out pulse feature analysis operations at the clock speed of said analog-to-digital converter; and
a digital computing device, which carries out pulse feature analysis operations at the pulse event rate.

35. The counter of claim 21 wherein the gas used in said chamber is nitrogen.

36. The counter of claim 21 wherein the counter is purged with nitrogen prior to the start of counting in order to remove radon and its decay products.

37. The counter of claim 21 wherein the sample material whose alpha emission rate is to be determined is placed within a specified region inside of said chamber, and
if the sample material is capable of migrating within the counter and so contaminating it, the sample material is covered with a piece of material that is thick enough to prevent the migration but thin enough to readily allow the alpha particles to penetrate into the volume of the counter.

**Patentansprüche**

1. Verfahren zum Betreiben eines gasgefüllten Alphazählers, der Folgendes enthält: eine gasgefüllte Kammer mit einem Probengebiet, eine in der Kammer angeordnete Anode zum Sammeln von Ladungen in der Kammer, einen mit der Anode verbundenen Vorverstärker zum Empfangen der darauf gesammelten Ladung und eine Spannungsquelle, die konfiguriert ist, bei Verwendung eine Vorspannung der Art an die Anode anzulegen, dass immer dann, wenn durch ein Alphateilchen, das durch das Gas in der Kammer hindurchtritt, eine Ionisationsspur erzeugt wird, die Elektronen in der Spur von der Anode gesammelt werden und von dem Vorverstärker empfangen werden, um zu bewirken, dass der Vorverstärker einen mit dem Alphateilchen assoziierten Anodenausgangssignalimpuls erzeugt, wobei die Kammer und die Anode so konfiguriert sind, dass von verschiedenen Oberflächen des Zählers emanierende Ionisationsspuren charakteristisch verschiedene Anodenausgangssignalimpulse erzeugen, wobei das Verfahren für mindestens einige Impulse folgendes umfasst:

Messen eines oder mehrerer Merkmale des Anodenausgangssignalimpulses, die je nach der Emanationsoberfläche des mit dem Anodenausgangssignalimpuls assoziierten Alphateilchens differieren; und
Bestimmen der Emanationsoberfläche des mit dem Anodenausgangssignalimpuls assoziierten Alphateilchens auf der Basis der Messung des einen oder der mehreren Merkmale des Anodenausgangssignalimpulses.

2. Verfahren nach Anspruch 1 und weiterhin umfassend das Zurückweisen des Impulses als Hintergrund, falls bestimmt wird, dass das assoziierte Alphateilchen des Impulses nicht von einer dem Probengebiet entsprechenden Oberfläche emanierte.

3. Verfahren nach Anspruch 1, wobei mindestens einer der Mess- und Bestimmungsschritte durch analoge Verarbeitungsschaltungen ausgeführt wird.

4. Verfahren nach Anspruch 1, wobei das Vorverstärkerausgangsignal durch einen Analog-Digital-Wandler konditioniert und digitalisiert wird und mindestens einer der Mess- und Bestimmungsschritte durch digitale Verarbeitungsschaltungen ausgeführt wird.

5. Verfahren nach Anspruch 1, wobei:

das Probengebiet ein spezifiziertes Gebiet innerhalb der Kammer ist;
das Probenmaterial, dessen Alphaemissionsrate bestimmt werden soll, innerhalb des Probengebiets platziert wird und

falls das Probenmaterial innerhalb des Zählers migrieren und ihn so kontaminieren kann, das Probenmaterial daran gehindert wird, indem es mit einem Materialstück bedeckt wird, das dick genug ist, um die Migration zu verhindern, aber dünn genug, um das leichte Eindringen der Alphateilchen in das Volumen des Zählers zu gestatten.

6.   Verfahren nach Anspruch 1, wobei:

das Probengebiet ein Gebiet der Kammer bei einem Stück Fenstermaterial ist, dass dünn genug ist, um das leichte Eindringen von von außerhalb der Kammer kommenden Alphateilchen durch das Materialstück in die Kammer zu gestatten; und

das Probenmaterial, dessen Alphaemissionsrate bestimmt werden soll, außerhalb der Kammer platziert wird und durch das Stück Fenstermaterial davon getrennt ist.

7.   Verfahren nach Anspruch 1, wobei die Unterschiede bei dem einen oder den mehreren Anodenimpulsmerkmalen, die von der Emanationsoberfläche des Impulses abhängen, übertrieben werden, indem der Zähler so konstruiert oder betrieben wird, dass einer oder mehrere der folgenden Bedingungen erfüllt sind:

der Zähler arbeitet im Ionisationsmodus;

im Wesentlichen unterschiedliche elektrische Sammelfelder werden bei verschiedenen Oberflächen der Alphateilchenemanationen erzeugt;

im Wesentlichen verschiedene Ladungssammelabstände werden bei den verschiedenen Oberflächen der Alphateilchenemanation erzeugt;

das eine oder die mehreren Elektrodenelemente, die die Anode umfassen, werden in der Kammer asymmetrisch platziert;

Ionisationsspuren, die von den verschiedenen Oberflächen emanieren, benötigen zum Sammeln unterschiedliche Zeitdauern; und

Ionisationsspuren, die von den verschiedenen Oberflächen emanieren, generieren unterschiedliche Mengen an induzierter Ladung in der Anode, während sie gesammelt werden.

8.   Verfahren nach Anspruch 1, wobei die Kammer Seitenwände aufweist und weitere Informationen über die Emanationsoberfläche eines Alphateilchens erhalten werden durch:

Bereitstellen einer Schutzelektrode in der Nähe der Seitenwände, wodurch ein zusätzlicher Vorverstärker an die Schutzelektrode gekoppelt wird;

Vorspannen der Schutzelektrode, so dass immer dann, wenn ein von einer der Seitenwände emanierendes Alphateilchen eine Ionisationsspur erzeugt, ein Teil der Elektronen in der Spur von der Schutzelektrode gesammelt wird und bewirkt, dass der zusätzliche Vorverstärker einen Schutzausgangssignalimpuls erzeugt; und

für mindestens einige der gemessenen Anodenausgangssignalimpulse:

auch Messen eines oder mehrerer Merkmale der Schutzausgangssignalimpulse von dem zusätzlichen Vorverstärker, die je nach der Emanationsoberfläche des Schutzausgangssignalimpulses differieren;

Bestimmen auf der Basis der Messung des einen oder der mehreren Merkmale des Schutzimpulses, ob die assoziierte Ionisationsspur von einer der Seitenwände emanierte; und

Zurückweisen aller Alphateilchen als Hintergrund, deren assoziierte Ionisationsspuren als von einer der Seitenwände emanierend identifiziert werden.

9.   Verfahren nach Anspruch 8, wobei das eine oder die mehreren Merkmale des Schutzimpulses mindestens eines der Folgenden enthalten:

die Ankunftszeit des Schutzausgangssignalimpulses relativ zu der des Anodenausgangssignalimpulses und die finale Änderung bei der Amplitude des Schutzausgangssignalimpulses.

10.  Verfahren Anspruch 9, wobei für das zurückzuweisende Alphateilchen der Schutzausgangssignalimpuls zusammen mit dem Anodenausgangssignalimpuls ankommen muss und

die auf der Schutzelektrode gesammelte Gesamtladungsmenge einen Schwellwert übersteigen muss.

11.  Verfahren nach Anspruch 8, wobei:

die Anode aus ungefähr innerhalb einer Ebene liegenden Drähten besteht;
die Kammer teilweise von zwei nominell parallelen Wänden begrenzt ist, von denen eine mit dem Probengebiet assoziiert ist;
die Anodendrahtebene nominell parallel zu den Wänden verläuft, aber dadurch asymmetrisch platziert ist, dass sie sich signifikant näher an einer Wand als an der anderen Wand befindet; und
die Schutzelektrode einen oder mehrere zusätzliche Drähte umfasst, die den Umfang der Anodendrähte einschließen und etwa in der gleichen Ebene liegen.

12. Verfahren nach Anspruch 8, wobei die Anode und das Probegebiet beides Ebenen sind, ungefähr parallel zueinander und durch einen Abstand getrennt, der signifikant länger ist als die Reichweite der in der Kammer anzutreffenden energiereichsten Alphateilchen; und
die Schutzelektrode den Umfang der Anode umgibt und in der gleichen oder ungefähr der gleichen Ebene wie die Anode liegt.

13. Verfahren nach Anspruch 12, wobei eine zusätzliche feldformende Elektrodenstruktur gewendet wird, um die Gleichförmigkeit des elektrischen Felds in dem Volumen zwischen der Anode und dem Probengebiet zu vergrößern.

14. Verfahren nach Anspruch 12, wobei die Anode und die Schutzelektrode so bündig innerhalb einer stützenden Isolatorstruktur eingebettet sind, dass die resultierende Verbundstruktur frei von Rissen und Hohlräumen ist und leicht gesäubert werden kann, um solche kontaminierenden Materialien zu entfernen, die sich möglicherweise im Verlauf eines Zählerbetriebs anhäufen.

15. Verfahren nach Anspruch 1, wobei das eine oder die mehreren Merkmale des Anodenimpulses mindestens eines der Folgenden enthalten:

   die Dauer des Impulses;
   die Amplitude des Impulses;
   die Steigung des Impulses und
   die Steigung des Impulses, dividiert durch seine Amplitude.

16. Verfahren nach Anspruch 15, wobei die Dauer von einem Zeitgeber gemessen wird, der von einem Diskriminator getaktet wird, dessen Ausgangssignal immer dann auf H geht, wenn sein Eingangssignal einen voreingestellten Schwellwert übersteigt, wobei das Eingangssignal zu dem Diskriminator das Vorverstärkersignal ist, dass von einem Shaping-Filter gefiltert wird, dessen Zeitkonstante im Vergleich zu einer typischen Impulsanstiegszeit schnell ist.

17. Verfahren nach Anspruch 15, wobei die Steigung durch ein mittelwertbildendes Differenziator-Filter gemessen wird, dessen Ausgangssignal kurz nach dem anfänglichen Detektieren des Impulses erfasst wird.

18. Verfahren nach Anspruch 15, wobei die Impulsamplitude unter Verwendung eines Trapezfilters gemessen wird, dessen Lücke so eingestellt ist, dass sie die längste erwartete Impulsanstiegszeit von 0 auf 100 % übersteigt, und dessen Ausgangssignal zu einer vorbestimmten Zeit nach dem anfänglichen Detektieren des Impulses erfasst wird.

19. Verfahren nach Anspruch 15, wobei die Impulsamplitude gemessen wird, indem der Wert eines mittelwertbildenden Filters kurz nach dem Detektieren des Impulsmaximums erfasst und von diesem Wert ein Ausgangswert des gleichen mittelwertbildenden Filters subtrahiert wird, der kurz vor dem anfänglichen Detektieren des Impulses erfasst wird.

20. Verfahren nach Anspruch 1, wobei die Hintergrundzählrate weiter reduziert wird, indem der Alphazähler aus Materialien mit niedrigen Alphateilchen-Emissionsraten konstruiert wird.

21. Alphateilchenzähler, der folgendes umfasst:

   eine gasgefüllte Kammer mit einem Probengebiet;
   eine in der Kammer angeordnete Anode zum Sammeln von Ladungen in der Kammer;
   einen mit der Anode verbundenen Vorverstärker zum Empfangen der darauf gesammelten Ladung;
   eine Spannungsquelle, die konfiguriert ist, bei Verwendung eine Vorspannung der Art an die Anode anzulegen, dass immer dann, wenn durch ein Alphateilchen, das durch das Gas in der Kammer hindurchtritt, eine Ionisationsspur erzeugt wird, die Elektronen in der Spur von der Anode gesammelt werden und von dem Vorverstärker empfangen werden, um zu bewirken, dass der Vorverstärker ein mit dem Alphateilchen assoziierten Anodenausgangssignalimpuls erzeugt,

wobei die Kammer und die Anode so konfiguriert sind, dass von verschiedenen Oberflächen des Zählers emanierende Ionisationsspuren charakteristisch verschiedene Anodenausgangssignalimpulse erzeugen, und ein primärer

Impulsmerkmalsanalysierer, der konfiguriert ist zum:

Messen des einen oder der mehreren Merkmale eines Anodenausgangssignalimpulses, die je nach der Emanationsoberfläche differieren; und

Bestimmen der Oberfläche in der Kammer, von der die durch die Alphateilchen erzeugte Ionisationsspur emanierte, auf der Basis der Messung des einen oder der mehreren Merkmale des Anodenausgangssignalimpulses.

22. Zähler nach Anspruch 21, wobei der primäre Impulsmerkmalsanalysierer weiterhin konfiguriert ist zum Zurückweisen des Impulses als Hintergrund, falls er bestimmt, dass das assoziierte Alphateilchen des Impulses nicht von dem Probengebiet emanierte, wodurch die Hintergrundzählrate des Zählers reduziert wird.

23. Zähler nach Anspruch 21, wobei der Zähler eines oder mehrerer der folgenden Merkmale hinsichtlich Konstruktion oder Betrieb aufweist, die dazu dienen, die Unterschiede bei den Anodenimpulsmerkmalen zu erzeugen oder zu übertreiben:

der Betrieb erfolgt im Ionisationsmodus;

es gibt wesentlich unterschiedliche elektrische Sammelfelder bei den verschiedenen Gebieten der Alphateilchenemanation;

es gibt wesentlich verschiedene Ladungssammelabstände bei den verschiedenen Gebieten der Alphateilchenemanation;

eines oder mehrere der Elektrodenelemente, die die Anode umfassen, sind in der Kammer asymmetrisch platziert;

Ionisationspuren von den verschiedenen Gebieten der Alphateilchenemanation weisen im Wesentlichen unterschiedliche Ladungssammelzeiten auf; und

Ionisationspuren von den verschiedenen Gebieten erzeugen im Wesentlichen verschiedene Mengen an induzierter Ladung in der Anode, während sie gesammelt werden.

24. Zähler nach Anspruch 21, wobei der Zähler Seitenwände aufweist, und weiterhin umfassend:

eine Schutzelektrode in der Nähe der Seitenwände; einen mit der Schutzelektrode verbundenen zusätzlichen Vorverstärker;

eine zusätzliche Spannungsquelle, die die Schutzelektrode so vorspannt, dass die Schutzelektrode Elektronen von Ionisationsspuren sammelt und der zusätzliche Vorverstärker Schutzausgangssignalimpulse erzeugt; und

einen sekundären Impulsmerkmalsanalysierer, der:

das eine oder die mehreren Merkmale der Schutzausgangssignalimpulse misst;

auf der Basis der Messung des einen oder der mehreren Merkmale der Schutzimpulse zusätzliche Informationen über die Oberfläche bestimmt, von der das assoziierte Alphateilchen des Impulses emanierte; und

den Impuls als Hintergrund zurückweist, falls er bestimmt, dass das assoziierte Alphateilchen des Impulses von einer der Kammerseitenwände emanierte, wodurch die Hintergrundzählrate des Zählers reduziert wird.

25. Zähler nach Ansprüchen 24, wobei der sekundäre Impulsmerkmalsanalysierer das Alphateilchen zurückweist, wenn er bestimmt, dass:

der Schutzausgangssignalimpuls zusammen mit dem Anodenausgangssignalimpuls ankam und

die auf der Schutzelektrode gesammelte Gesamtladungsmenge einen Schwellwert überstieg.

26. Zähler nach Anspruch 24, wobei:

die Anode aus ungefähr innerhalb einer Ebene liegenden Drähten besteht;

die Kammer teilweise von zwei nominell parallelen Wänden begrenzt ist, von denen eine mit dem Probengebiet assoziiert ist;

die Ebene, in der die Anodendrähte liegen, nominell parallel zu den Wänden verläuft, aber dadurch asymmetrisch platziert ist, dass sie sich signifikant näher an einer der Wände als an der anderen der Wände befindet; und die Schutzelektrode einen oder mehrere zusätzliche Drähte umfasst, die den Umfang der Anodendrähte einschließen und etwa in der gleichen Ebene liegen.

27. Verfahren nach Anspruch 24, wobei die Anode und das Probegebiet beides Ebenen sind, ungefähr parallel zueinander und durch einen Abstand getrennt, der signifikant länger ist als die Reichweite der in der Kammer anzutreffenden energiereichsten Alphateilchen; und die Schutzelektrode den Umfang der Anode umgibt und in der gleichen oder ungefähr der gleichen Ebene wie die Anode liegt.

28. Verfahren nach Anspruch 26 und weiterhin umfassend eine zusätzliche feldformende Elektrodenstruktur, die die Gleichförmigkeit des elektrischen Felds in dem Volumen zwischen der Anode und dem Probegebiet vergrößert.

29. Verfahren nach Anspruch 21, wobei der primäre Impulsmerkmalsanalysierer Mittel enthält zum Bestimmen eines oder mehrerer der Folgenden:

der Dauer des Impulses;
der Amplitude des Impulses;
der Steigung des Impulses und
der Steigung des Impulses, dividiert durch seine Amplitude.

30. Zähler nach Anspruch 29, wobei der primäre Impulsmerkmalsanalysierer die Impulsdauer bestimmt unter Verwendung:

eines Shaping-Filters, dessen Zeitkonstante signifikant kürzer ist als die einer typischen Impulsanstiegszeit;
eines Diskriminators, dessen Ausgangssignal immer dann auf H geht, wenn sein Eingangssignal von dem Shaping-Filter einen voreingestellten Schwellwert übersteigt;
und
eines Zeitgebers, der durch das Ausgangssignal des Diskriminators getaktet wird.

31. Zähler nach Anspruch 29, wobei der primäre Impulsmerkmalsanalysierer die Steigung bestimmt unter Verwendung:

eines mittelwertbildenden Differentiationsfilters und
von Mitteln zum Erfassen des Ausgangssignals des Filters kurz nach dem anfänglichen Detektieren des Impulses.

32. Zähler nach Anspruch 29, wobei der primäre Impulsmerkmalsanalysierer die Impulsamplitude bestimmt unter Verwendung:

eines Trapezfilters, dessen Lücke so eingestellt ist, dass sie die längste erwartete Impulsanstiegszeit von 0 auf 100 % übersteigt ; und
von Mitteln zum Erfassen des Ausgangssignals des Filters zu einer vorbestimmten Zeit nach dem anfänglichen Detektieren des Impulses.

33. Zähler nach Anspruch 21 und weiterhin umfassend:

einen Analog-Digital-Wandler zum Digitalisieren des Vorverstärkerausgangssignals und eine digitale Signalverarbeitungsschaltung, die den primären Impulsmerkmalsanalysierer ganz oder teilweise implementiert.

34. Zähler nach Anspruch 33, wobei die digitale Signalverarbeitungsschaltung mindestens Folgendes umfasst:

einen Verknüpfungslogiksatz, der Impulsmerkmalsanalyseoperationen mit der Taktgeschwindigkeit des Analog-Digital-Wandlers ausführt; und
eine digitale Recheneinrichtung, die Impulsmerkmalsanalyseoperationen mit der Impulsereignisrate ausführt.

35. Zähler nach Anspruch 21, wobei das in der Kammer verwendete Gas Stickstoff ist.

36. Zähler nach Anspruch 21, wobei der Zähler vor dem Start des Zählens mit Stickstoff gespült wird, um Radon und seine Zersetzungsprodukte zu beseitigen.

37. Zähler nach Anspruch 21, wobei das Probenmaterial, dessen Alphaemissionsrate bestimmt werden soll, innerhalb eines spezifizierten Gebiets innerhalb der Kammer platziert ist, und
falls das Probenmaterial innerhalb des Zählers migrieren und ihn so kontaminieren kann, dass Probenmaterialmit einem Materialstück bedeckt wird, dass dick genug ist, um die Migration zu verhindern, aber dünn genug, damit die Alphateilchen ohne weiteres in das Volumen des Zählers eindringen können.

**Revendications**

1. Procédé de fonctionnement d'un compteur alpha rempli de gaz qui comprend une chambre remplie de gaz ayant une zone d'échantillonnage, une anode disposée dans la chambre afin de collecter des charges dans la chambre, un préamplificateur connecté à l'anode afin de recevoir la charge collectée sur cette dernière, et une source de tension configurée, en utilisation, pour appliquer une polarisation à l'anode de sorte que, à chaque fois qu'une trace d'ionisation est générée par une particule alpha passant à travers le gaz à l'intérieur de la chambre, les électrons de la trace sont collectés par l'anode et sont reçus par le préamplificateur afin d'amener le préamplificateur à produire une impulsion de signal de sortie d'anode associée à la particule alpha, dans lequel la chambre et l'anode sont configurées de sorte que les traces d'ionisation émanant des différentes surfaces du compteur produisent des impulsions de signal de sortie d'anode caractéristiquement différentes, le procédé comprenant, au moins pour certaines impulsions :

   la mesure d'une ou plusieurs caractéristiques de l'impulsion de signal de sortie d'anode qui diffèrent en fonction de la surface d'émanation de la particule alpha associée à l'impulsion de signal de sortie d'anode ; et
   la détermination, en se basant sur la mesure d'une ou plusieurs caractéristiques de l'impulsion de signal de sortie d'anode, de la surface d'émanation de la particule alpha associée à l'impulsion de signal de sortie d'anode.

2. Procédé selon la revendication 1, comprenant en outre le rejet de l'impulsion en tant qu'impulsion de fond s'il est déterminé que la particule alpha associée à l'impulsion n'émanait pas d'une surface correspondant à la zone d'échantillonnage.

3. Procédé selon la revendication 1, dans lequel au moins l'une desdites étapes de mesure et de détermination est réalisée par des circuits de traitement analogique.

4. Procédé selon la revendication 1, dans lequel le signal de sortie de préamplificateur est conditionné et numérisé par un convertisseur analogique-numérique, et au moins l'une desdites étapes de mesure et de détermination est réalisée par des circuits de traitement numérique.

5. Procédé selon la revendication 1, dans lequel :

   la zone d'échantillonnage est une zone spécifiée à l'intérieur de la chambre ; le matériau d'échantillonnage dont le taux d'émission alpha doit être déterminé est placé à l'intérieur de la zone d'échantillonnage ; et
   si le matériau d'échantillonnage est capable de migrer à l'intérieur du compteur et ainsi de le contaminer, on empêche le matériau d'échantillonnage de le faire en le couvrant avec un morceau de matériau qui est assez épais pour empêcher la migration et assez fin pour permettre aux particules alpha de pénétrer facilement dans le volume du compteur.

6. Procédé selon la revendication 1, dans lequel :

   la zone d'échantillonnage est une zone de la chambre adjacente à un morceau de matériau de fenêtre qui est assez fin pour permettre aux particules alpha provenant de l'extérieur de la chambre de pénétrer facilement à travers le morceau de matériau dans la chambre ; et
   le matériau d'échantillonnage dont le taux d'émission alpha doit être déterminé est placé à l'extérieur de la chambre et en est séparé par le morceau de matériau de fenêtre.

7. Procédé selon la revendication 1, dans lequel les différences d'une ou de plusieurs caractéristiques d'impulsion d'anode qui dépendent de la surface d'impulsion d'émanation sont exagérées en construisant ou en exploitant le compteur de sorte qu'une ou plusieurs des conditions suivantes sont remplies :

le compteur fonctionne en mode ionisation ;

des champs de collecte électriques sensiblement différents sont créés à proximité des différentes surfaces d'émanation de particule alpha ;

des distances de collecte de charge sensiblement différentes sont créées à proximité des différentes surfaces d'émanation de particule alpha ;

un ou plusieurs éléments d'électrode qui comprennent l'anode sont placés asymétriquement à l'intérieur de la chambre ;

les traces d'ionisation émanant des différentes surfaces nécessitent des durées différentes afin d'être collectées ; et

les traces d'ionisation émanant des différentes surfaces génèrent des quantités différentes de charge induite dans l'anode lorsqu'elles sont collectées.

8. Procédé selon la revendication 1, dans lequel la chambre comporte des parois latérales et des informations supplémentaires à propos d'une surface de particule alpha d'émanation sont obtenues en :

fournissant une électrode de garde à proximité des parois latérales couplant un préamplificateur supplémentaire à l'électrode de garde ;

polarisant l'électrode de garde de sorte que, à chaque fois qu'une particule alpha émanant de l'une des parois latérales génère une trace d'ionisation, une fraction des électrons de la trace est collectée par l'électrode de garde et amène le préamplificateur supplémentaire à produire une impulsion de signal de sortie de garde ; et pour au moins certaines des impulsions de signal de sortie d'anode mesurée :

mesurant également une ou plusieurs caractéristiques des impulsions de signal de sortie de garde en provenance du préamplificateur supplémentaire qui diffèrent en fonction de la surface d'émanation de l'impulsion de signal de sortie de garde ;

déterminant, en se basant sur la mesure d'une ou plusieurs caractéristiques de l'impulsion de garde, si la trace d'ionisation associée émanait d'une des parois latérales ; et

rejetant comme particules de fond toutes particules alpha dont les traces d'ionisation associées sont identifiées comme émanant d'une des parois latérales.

9. Procédé selon la revendication 8, dans lequel une ou plusieurs caractéristiques de l'impulsion de garde comprennent au moins une des suivantes :

le temps d'arrivée de l'impulsion de signal de sortie de garde par rapport à celui de l'impulsion de signal de sortie d'anode ; et

le changement final de l'amplitude d'impulsion de signal de sortie de garde.

10. Procédé selon la revendication 9, dans lequel, pour que la particule alpha soit rejetée, l'impulsion de signal de sortie de garde doit arriver en coïncidence avec l'impulsion de signal de sortie d'anode ; et

la quantité de charge totale collectée sur l'électrode de garde doit dépasser un seuil.

11. Procédé selon la revendication 8, dans lequel :

l'anode est composée de fils se trouvant approximativement à l'intérieur d'un plan ;

la chambre est en partie délimitée par deux parois nominalement parallèles, dont l'une est associée à la zone d'échantillonnage ;

le plan de fils d'anode est nominalement parallèle aux parois mais est placé asymétriquement en ce qu'il est significativement plus proche d'une des deux parois ; et

l'électrode de garde comprend un ou plusieurs fils supplémentaires renfermant le périmètre des fils d'anode et se trouvant approximativement dans le même plan.

12. Procédé selon la revendication 8, dans lequel l'anode et la zone d'échantillonnage sont toutes deux des plans, approximativement parallèles l'une à l'autre, et séparées d'une distance qui est significativement plus longue que la portée des particules alpha les plus énergétiques se trouvant à l'intérieur de ladite chambre ; et

l'électrode de garde entoure le périmètre de l'anode et se trouve dans le même plan ou approximativement le même plan que l'anode.

13. Procédé selon la revendication 12, dans lequel une structure d'électrode de mise en forme de champ supplémentaire est utilisée pour augmenter l'uniformité de champ électrique dans le volume entre l'anode et la zone d'échantillonnage.

14. Procédé selon la revendication 12, dans lequel l'anode et l'électrode de garde sont encastrées à niveau à l'intérieur d'une structure isolante de telle sorte que la structure composite résultante est exempte de fissures et de vides et peut être facilement nettoyée afin d'éliminer des matériaux contaminants qui peuvent s'accumuler au cours du fonctionnement du compteur.

15. Procédé selon la revendication 1, dans lequel une ou plusieurs caractéristiques de l'impulsion d'anode comprennent au moins l'une des suivantes :

   la durée d'impulsion ;
   l'amplitude d'impulsion ;
   la pente d'impulsion ; et
   la pente d'impulsion divisée par son amplitude.

16. Procédé selon la revendication 15, dans lequel la durée est mesurée par une minuterie qui est déclenchée par un discriminateur dont la sortie devient élevée à chaque fois que son entrée dépasse un seuil préétabli, où l'entrée dans le discriminateur est le signal de préamplificateur filtré par un filtre de mise en forme dont la constante de temps est rapide par rapport à un temps de montée d'impulsion typique.

17. Procédé selon la revendication 15, dans lequel la pente est mesurée par un filtre différentiateur de moyennage dont la sortie est capturée juste après que l'impulsion est initialement détectée.

18. Procédé selon la revendication 15, dans lequel l'amplitude d'impulsion est mesurée en utilisant un filtre trapézoïdal dont l'entrefer est établi pour dépasser le plus long temps de montée prévu de 0 à 100 % de l'impulsion et dont la sortie est capturée à un moment prédéterminé après que l'impulsion est initialement détectée.

19. Procédé selon la revendication 15, dans lequel l'amplitude d'impulsion est mesurée en capturant la valeur d'un filtre de moyennage juste après que le maximum d'impulsion est détecté et en soustrayant de cette valeur une valeur de sortie du même filtre de moyennage capturé juste avant que la première impulsion soit initialement détectée.

20. Procédé selon la revendication 1, dans lequel le taux de comptage de fond est en outre réduit en construisant le compteur alpha à partir de matériaux ayant des faibles taux d'émission de particule alpha.

21. Compteur de particule alpha comprenant :

   une chambre remplie de gaz ayant une zone d'échantillonnage ;
   une anode disposée dans la chambre afin de collecter des charges dans la chambre ;
   un préamplificateur connecté à ladite anode afin de recevoir la charge collectée sur cette dernière ;
   une source de tension configurée pour, en utilisation, appliquer une polarisation à l'anode de sorte que, à chaque fois qu'une trace d'ionisation est générée par le passage d'une particule alpha à travers ledit gaz à l'intérieur de ladite chambre, les électrons de ladite trace sont collectés par ladite anode et sont reçus par le préamplificateur afin d'amener ledit préamplificateur à produire une impulsion de signal de sortie d'anode associée à la particule alpha ;
   dans lequel la chambre et l'anode sont configurées de sorte que les traces d'ionisation émanant de différentes surfaces du compteur produisent des impulsions de signal de sortie d'anode caractéristiquement différentes ;
   et un analyseur de caractéristiques d'impulsion primaire configuré pour :

   mesurer une ou plusieurs caractéristiques d'une impulsion de signal de sortie d'anode qui diffèrent en fonction de la surface d'émanation d'impulsion ; et
   déterminer, en se basant sur la mesure d'une ou plusieurs caractéristiques de l'impulsion de signal de sortie d'anode, la surface à l'intérieur de la chambre à partir de laquelle la trace d'ionisation générée par la particule alpha émanait.

22. Compteur selon la revendication 21, dans lequel ledit analyseur de caractéristiques d'impulsion primaire est en outre configuré pour rejeter l'impulsion comme impulsion de fond s'il détermine que la particule alpha associée de l'impulsion n'émanait pas de la zone d'échantillonnage, réduisant ainsi le taux de comptage de fond du compteur.

**23.** Compteur selon la revendication 21, dans lequel le compteur a une ou plusieurs des caractéristiques de construction ou de fonctionnement suivantes qui servent à produire ou à exagérer les différences desdites caractéristiques d'impulsion d'anode :

le fonctionnement se fait en mode ionisation ;

il existe des champs de collecte électriques sensiblement différents à proximité des différentes zones d'émanation de particule alpha ;

il existe des distances de collecte de charge sensiblement différentes à proximité des différentes zones d'émanation de particule alpha ;

un ou plusieurs des éléments d'électrode qui comprennent l'anode sont placés asymétriquement à l'intérieur de la chambre ;

les traces d'ionisation des différentes zones d'émanation de particule alpha ont des temps de collecte de charge sensiblement différents ; et

les traces d'ionisation des différentes zones génèrent des quantités sensiblement différentes de charge induite dans l'anode lorsqu'elles sont collectées.

**24.** Compteur selon la revendication 21, dans lequel le compteur a des parois latérales, et comprenant en outre :

une électrode de garde à proximité desdites parois latérales ;

un préamplificateur supplémentaire connecté à ladite électrode de garde ;

une source de tension supplémentaire qui sollicite ladite électrode de garde de sorte que ladite électrode de garde collecte des électrons provenant de traces d'ionisation et ledit préamplificateur supplémentaire produit des impulsions de signal de sortie de garde ; et

un analyseur de caractéristiques d'impulsion secondaire qui :

mesure une ou plusieurs caractéristiques desdites impulsions de signal de sortie de garde ;

détermine, en se basant sur la mesure d'une ou plusieurs caractéristiques des impulsions de garde, des informations supplémentaires à propos de la surface à partir de laquelle la particule alpha associée de l'impulsion émanait ; et

rejette l'impulsion en tant qu'impulsion de fond s'il détermine que la particule alpha associée de l'impulsion émanait d'une desdites parois latérales de chambre, réduisant ainsi le taux de comptage de fond de compteur.

**25.** Compteur selon la revendication 24, dans lequel ledit analyseur de caractéristiques d'impulsion secondaire rejette la particule alpha lorsqu'il détermine que :

l'impulsion de signal de sortie de garde est arrivée en coïncidence avec l'impulsion de signal de sortie d'anode ; et

la quantité totale de charge collectée sur l'électrode de garde a dépassé un seuil.

**26.** Compteur selon la revendication 24, dans lequel :

ladite anode est composée de fils se trouvant approximativement à l'intérieur d'un plan ;

la chambre est en partie délimitée par deux parois nominalement parallèles, dont l'une est associée à ladite zone d'échantillonnage ;

ledit plan à l'intérieur duquel lesdits fils se trouvent est nominativement parallèle auxdites parois mais est placé asymétriquement en ce qu'il est significativement plus proche de l'une desdites parois que de l'autre desdites parois ; et

ladite électrode de garde est composée d'un ou plusieurs fils supplémentaires qui renferment le périmètre des fils d'anode et se trouvent approximativement dans le même plan.

**27.** Compteur selon la revendication 24, dans lequel ladite anode et ladite zone d'échantillonnage sont toutes deux des plans, parallèles l'une à l'autre, et séparées d'une distance qui est significativement plus longue que la portée des particules alpha les plus énergétiques se trouvant à l'intérieur de ladite chambre ; et

ladite électrode de garde entoure le périmètre de ladite anode et se trouve dans le même plan ou approximativement le même plan que l'anode.

**28.** Compteur selon la revendication 26, comprenant en outre une structure d'électrode de mise en forme de champ supplémentaire qui augmente l'uniformité du champ électrique dans le volume entre ladite anode et ladite zone d'échantillonnage.

**29.** Compteur selon la revendication 21, dans lequel ledit analyseur de caractéristiques d'impulsion primaire comprend un moyen permettant de déterminer un ou plusieurs des éléments suivants :

la durée d'impulsion ;
l'amplitude d'impulsion ;
la pente d'impulsion ; et
la pente d'impulsion divisée par son amplitude.

**30.** Compteur selon la revendication 29, dans lequel ledit analyseur de caractéristiques d'impulsion primaire détermine la durée d'impulsion en utilisant :

un filtre de mise en forme, dont la constante de temps est significativement plus courte que celle d'un temps de montée d'impulsion typique ;
un discriminateur dont la sortie devient élevée à chaque fois que son entrée dudit filtre de mise en forme dépasse un seuil prédéterminé ; et
une minuterie qui est déclenchée par la sortie dudit discriminateur.

**31.** Compteur selon la revendication 29, dans lequel ledit analyseur de caractéristiques d'impulsion primaire détermine la pente en utilisant :

un filtre de différenciation de moyennage ; et
un moyen permettant de capturer ladite sortie de filtre juste après que l'impulsion est initialement détectée.

**32.** Compteur selon la revendication 29, dans lequel ledit analyseur de caractéristiques d'impulsion primaire détermine l'amplitude d'impulsion en utilisant : un filtre trapézoïdal dont l'entrefer est établi pour dépasser le plus long temps de montée prévu de 0 à 100 % de l'impulsion ; et
un moyen permettant de capturer ladite sortie de filtre à un moment prédéterminé après que l'impulsion est initialement détectée.

**33.** Compteur selon la revendication 21, et comprenant en outre :

un convertisseur analogique-numérique destiné à numériser ledit signal de sortie de préamplificateur ; et un circuit de traitement de signal numérique implémentant une partie ou la totalité dudit analyseur de caractéristiques d'impulsion primaire.

**34.** Compteur selon la revendication 33, dans lequel ledit circuit de traitement de signal numérique comprend au moins :

un ensemble de logique combinatoire, qui réalise des opérations d'analyse de caractéristiques d'impulsion à la vitesse d'horloge dudit convertisseur analogique-numérique ; et
un dispositif de calcul numérique, qui réalise des opérations d'analyse de caractéristiques d'impulsion au taux d'évènement d'impulsion.

**35.** Compteur selon la revendication 21, dans lequel le gaz utilisé dans ladite chambre est l'azote.

**36.** Compteur selon la revendication 21, dans lequel le compteur est purgé avec de l'azote avant le démarrage du comptage afin d'éliminer le radon et ses produits de désintégration.

**37.** Compteur selon la revendication 21, dans lequel le matériau d'échantillonnage dont le taux d'émission alpha doit être déterminé et placé à l'intérieur d'une zone spécifiée à l'intérieur de ladite chambre, et
si le matériau d'échantillonnage est capable de migrer à l'intérieur du compteur et ainsi de le contaminer, le matériau d'échantillonnage est recouvert d'un morceau de matériau qui est assez épais pour empêcher la migration et assez fin pour permettre aux particules alpha de pénétrer facilement dans le volume du compteur.

FIG. 1 (PRIOR ART)

FIG. 2

EP 1 419 397 B1

FIG. 3

FIG. 4

I/O TO EXTERNAL INTERFACE

68

DSP  67  INT

DATA BUS  66  82

SLOPE OUTPUT REGISTER  88  GATE

TIMER  80  GATE  T  CLK  78

ENERGY OUTPUT REGISTER  92  GATE  94

DELAY  89  77

LEVEL DISCRIMINATOR  76  PULSE

CLOCK  65

DELAY  90

1 µs SHAPING FILTER  72

FAST SHAPING FILTER  70

ENERGY SHAPING FILTER  74

FPGA  64

ADC  62

SIGNAL CONDITION  60

50

FIG. 5

FIG. 6A

FIG. 6B

FIG. 6C

FIG. 6D

FIG. 7

FIG. 10

FIG. 8

FIG. 9

ANODE SOURCE SIGNAL

$V_a(t)$ vs TIME

$S_a(0)$

$V_{a\,MAX}$

$V_a(t)$

$0 \quad t_a \quad t_s \quad t_R$

TIME

LEGEND

$$t_a = \frac{d_a}{v_e} = \frac{d_a R}{\mu_e V}$$

$$V_a(t) = N K\left(t - \frac{t^2}{2\,t_a}\right) \quad \text{for } 0 \le t < t_a$$

$$S_a(0) = N K$$

$$V_{a\,MAX} = V_a(t_a) = N K\frac{t_a}{2}$$

FIG. 11A

SAMPLE SOURCE SIGNAL

$V_s(t)$ vs TIME

$V_{s\,MAX}$

$V_s(t)$

$S_s(0)$

$0 \quad t_a \quad t_s \quad t_R$

TIME

LEGEND

$$t_s = \frac{d_s}{v_e} = \frac{d_s R}{\mu_e V}$$

$$t_R = \frac{R}{v_e} = \frac{R^2}{\mu_e V}$$

$$V_s(t) = N K t \quad \text{for } 0 \le t \le t_s$$

$$= N K\left(t - \frac{(t - t_s)^2}{2(t_R - t_s)}\right) \quad \text{for } t_s \le t < t_R$$

$$S_s(0) = N K$$

$$V_{s\,MAX} = V_s(t_R) = N K\frac{t_R + t_s}{2}$$

FIG. 11B

FIG. 12

FIG. 13

FIG. 14

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5873054 A, W.K. Warburton and Z. Zhou

**Non-patent literature cited in the description**

- **M.C. BROWNE et al.** Low-background He Proportional Counters for Use in the Sudbury Neutrino Observatory. *IEEE Transactions on Nuclear Science,* August 1999, vol. 46 (4), 873-876
- Model 1950 Alpha Counter. *Product Literature (II-CO/Spectrum Sciences,* 1999
- International Technology Roadmap for Semiconductors, 1999 Edition. SEMATECH, 235
- **GLENN F. KNOLL.** Radiation Detection and Measurement. J. Wiley, 131-159
- Introduction to Charged-Particle Detectors. Modular Pulse-Processing Electronics and Semiconductor Radiation Detectors. EG&G Ortec, 1998, 1.8-1.16